Europäisches Patentamt

European Patent Office

Office européen des brevets

(19)

(11)  EP 1 603 051 A1

(12)  EUROPEAN PATENT APPLICATION
published in accordance with Art. 158(3) EPC

(43) Date of publication:
07.12.2005 Bulletin 2005/49

(51) Int Cl.⁷: **G06F 15/00**, G06F 17/60

(21) Application number: 04705489.5

(22) Date of filing: 27.01.2004

(86) International application number:
PCT/JP2004/000677

(87) International publication number:
WO 2004/068358 (12.08.2004 Gazette 2004/33)

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 27.01.2003 JP 2003017637
26.02.2003 JP 2003049710

(71) Applicant: MATSUSHITA ELECTRIC INDUSTRIAL
CO., LTD.
Kadoma-shi, Osaka 571-8501 (JP)

(72) Inventors:
• MIURA, Kouji
  Osaka 580-0016 (JP)
• YAMAMOTO, Masaya
  Hirakata-shi, Osaka 573-1151 (JP)
• TOKUDA, Katsumi
  Osaka, 563-0038 (JP)

(74) Representative: Balsters, Robert et al
Novagraaf International S.A.
25, avenue du Pailly
1220 Les Avanchets - Geneva (CH)

(54)  **DIGITAL CONTENT DISTRIBUTION SYSTEM**

(57)   The content distribution system according to the present invention is comprised of: a server device and a terminal device, the server device providing the terminal device with a license for using a content based on transaction processes, each including receiving of a request message, sending of a response message, and receiving of a commit message for finalizing completion of a transaction, and the terminal device controlling use of the content based on the license obtained from the server device, wherein the terminal device includes: a holding unit that holds a 1-bit transaction identification flag indicating whether a current transaction process is in progress or completed; and a sending unit that sends the transaction identification bit instead of an omitted commit message when sending a second or later request message, without sending a commit message in each transaction process except for a last transaction process in successive transaction processes, and the server device includes: a receiving unit that receives the transaction identification flag that is sent together with the second or later request message in the successive transaction processes; and a judgment unit that judges whether or not completion of one transaction should be finalized based on the received transaction identification flag.

FIG. 1

## Description

## Technical Field

The present invention relates to a system in which a digital content such as video and music, and a license permitting use of the digital content are distributed from a server device over a network and in which a user uses the digital content by a terminal device. More particularly, the present invention relates to a system and devices that prevent the unauthorized duplication and tampering of the license in a communication between the server device and the terminal device as well as preventing the loss and double-distribution of the license even in the event of the occurrence of a communication disconnection.

## Background Art

In recent years, a system referred to as a content distribution system has come into practical use. A content distribution system is a system in which a digital content such as music, video, and game (such a digital content is hereinafter described as a content) is distributed from a server device to a terminal device through a communication over the Internet or the like or through a digital broadcasting or the like, and in which it is possible to use the content by the terminal device. A general content distribution system uses copyright protection technology in order to protect the copyright of a content and to prevent unauthorized use of the content by a malicious user or the like. More specifically, the copyright protection technology is a technology for securely controlling the user's use of a content through use of cryptography or the like, such as the reproduction of the content and the copying of the content onto a storage medium.

For example, as an example content distribution system, Patent Document 1 describes a system in which a terminal device, after receiving an encrypted content, a usage condition, and a content decryption key from a server device and performing tampering detection, verifies the conformity to the usage condition, and decrypts and outputs the content only when all of the verification requirements are satisfied.

As described above, in the conventional content distribution system, since a license (which is a generic name for the usage condition and content decryption key, and is also referred to as a usage right) is distributed from the server device to the terminal device generally through a public network such as the Internet, it is necessary to prevent the tapping and tampering of the license. In other words, it is necessary to prevent the tampering of the usage condition and the leakage of the content key. Furthermore, the server device is required to authenticate the terminal device to which the license is to be distributed. In other words, it is also necessary to prevent the server device from distributing the license to an unintended terminal device. Protocols intended for the prevention of tapping and tampering and for the authentication of the party at the other end are called Secure Authenticated Channel (SAC) protocols, of which Secure Socket Layer (SSL) is well known, for example (Non-patent Document 1).

Meanwhile, in the case where a communication disconnection occurs during the license distribution due to the breakdown of the communication device or the communication line, power failure, or others, there is a possibility that such license is lost. This causes a loss to the user such as that the user cannot reproduce the content s/he has purchased. For example, Patent Document 2 and Patent Document 3 describe a protocol for preventing the loss of communication data attributable to a communication disconnection by re-sending the data.

(Patent Document 1): Japanese Patent No. 3276021

(Patent Document 2): Japanese Laid-Open Patent application No. 2002-251524

(Patent Document 3): Japanese Laid-Open Patent application No. 2003-16041

(Non-patent Document 1): A. Frier, P. Karlton, and P. Kocher, "The SSL 3.0 Protocol", [online], NetScape Communication Corp., Nov. 18, 1996, [searched on January 17, 2003], Internet <URL: http://wp.netscape.com/ eng/ssl3/draft302.txt.>

However, in order to expand the scope of application, a SAC protocol and a communication disconnection countermeasure protocol place their emphasis on the versatility and each of them are proposed individually. For this reason, in order to achieve all the functions using both of the above protocols, that is, the prevention of license tapping and tampering, the authentication of the party at the other end, and countermeasures for communication disconnection, sendings and receivings are required to be performed for the number of times required for the both protocols.

Furthermore, in the case where transactions such as obtainment and returning of a license need to be carried out in a successive manner and the SAC protocol and the communication disconnection countermeasure protocol are simply repeated on a transaction basis, the number of sendings and receivings increases by a multiple of the number of sendings and receivings required to be performed per transaction. For example, letting that the number of sendings and receivings required per transaction is 4, sending and receiving needs to be performed for 4n times to process "n" transactions.

This causes a problem that there occurs a delay in a communication until the terminal device completes transaction processes and thus the user has to wait until such user receives a response after making a request.

## Disclosure of Invention

The present invention aims at solving the conventional problem as described above, and it is an object of the present invention to provide a system and devices with which it is possible to (1) achieve all the functions, that is, the prevention of license tapping and tampering, the authentication of the party at the other end, and countermeasures for communication disconnection, (2) reduce the number of times sendings and receivings are carried out between a server device and a terminal device in the case where plural transaction processes are performed, and (3) realize a protocol that requires the server device and the terminal device to manage and hold a small amount of information to achieve the above functions. Through the above, the present invention aims at providing a content distribution system that is capable of reducing the time the user has to wait until such user receives a response after making a request.

The terminal device that achieves the above object is a terminal device that obtains, from a server device, a license for using a content based on transaction processes and controls use of the content based on the license, each of the transaction processes including sending of a request message, receiving of a response message, and sending of a commit message for finalizing completion of one transaction, the terminal device including: a holding unit that holds a 1-bit transaction identification flag indicating whether a current transaction process is in progress or completed; and a sending unit that sends the transaction identification bit instead of a commit message when sending a second or later request message, without sending a commit message in each transaction process except for a last transaction process in successive transaction processes.

Furthermore, the server device that achieves the above object is a server device that provides a terminal device with a license for using a content based on transaction processes, each including receiving of a request message, sending of a response message, and receiving of a commit message for finalizing completion of one transaction, the server device including: a receiving unit that receives a 1-bit transaction identification flag that is sent, instead of the commit message, together with a second or later request message in successive transaction processes, the transaction identification flag indicating whether a transaction process is in progress or completed in the terminal device; and a judgment unit that judges whether or not completion of one transaction should be finalized based on the received transaction identification flag.

With the above structure, in the case where plural transaction processes are performed in a content distribution system that includes the terminal device and the server device, a transaction identification flag is sent instead of a commit message, together with a request message. In other words, with the above structure, a commit message and a request message that are conventionally sent separately in two successive transaction processes are sent by being multiplexed as a single message. As described above, since a commit message is not sent, it is possible to reduce the number of times message sendings and receivings are carried out between the server device and the terminal device. Furthermore, a small amount of information, a 1-bit transaction identification flag, allows the server device and the terminal device to achieve both the reduction in the number of message sendings and receivings and countermeasures for communication disconnection. Accordingly, it is possible to reduce the time the user has to wait until such user receives a response after making a request.

Here, the terminal device may include: a response receiving unit that receives each response message sent from the server device in the transaction processes; and an update unit that updates the transaction identification flag held by the holding unit according to each reception result of the response receiving unit. Furthermore, the update unit may set a same value as a value of a transaction identification flag held by the server device as an initial value of the transaction identification flag held by the holding unit, and may invert a value of the transaction identification flag held by the holding unit when a response message is received by the response receiving unit.

Here, in the server device, a value of the transaction identification flag may be inverted every time a transaction is processed by the terminal device, and the server device may further include a holding unit that holds a first flag that is a copy of the transaction identification flag that is sent together with a preceding request message in the transaction processes, wherein the judgment unit may judge that completion of a preceding transaction should be finalized in the case where the transaction identification flag in the current transaction process and the first flag held by the holding unit do not match, the transaction identification flag being received by the receiving unit.

With the above structure, it is possible for the judgment unit in the server device to judge whether the preceding transaction process has completed or not in the terminal device by comparing the first flag that is a copy of the preceding transaction identification flag and the current transaction identification flag received.

Here, in the terminal device, the initial value of the transaction identification flag may be included in a first response message sent from the server device in the transaction processes, and the update unit may set the transaction identification flag held by the holding unit to the initial value when the response receiving unit receives the first response message, and may invert the value of the transaction identification flag held by the holding unit when a response message is normally received by the response receiving unit.

Here, the server device may include a response sending unit that sends, to the terminal device, an initial value of the first flag as an initial value of the transaction identification flag, together with a first response message in the transaction processes.

With the above structure, the judgment unit in the server device judges that the transaction process has not completed in the case where the first flag and the current transaction identification flag received match since there is no change in the state of the transaction process in the terminal device, whereas it judges that the transaction process has completed in the case where they do not match since there is a change in the state of the transaction process in the terminal device. As described above, it is possible for the server device to easily judge the state of a transaction process (whether it has completed or not) in the terminal device based on a transaction identification flag, without receiving any commit messages.

Here, the request sending unit in the terminal device may send again the transaction identification bit that is not inverted, together with a request message for the current transaction process, in the case where a response message is not normally received by the response receiving unit.

Here, the response sending unit may send again the response message for the preceding transaction process in the case where the judgment unit judges that the completion of the preceding transaction should not be finalized.

Here, the terminal device may perform processing for mutual authentication with the server device immediately before a first transaction process in the transaction processes, and may further include: an authentication unit that: provides the sending unit with first authentication information as an authentication request, the first authentication information being used by the server device to authenticate the terminal device; verifies second authentication information that is received by the response receiving unit as a response to the first authentication information, the second authentication information being used by the terminal device to authenticate the server device; and provides the sending unit with a finalization message for finalizing the mutual authentication according to a result of the verification, wherein the sending unit may send the finalization message together with a request message for the first transaction process. Furthermore, the server device may perform processing for mutual authentication with the terminal device immediately before a first transaction process in the transaction processes, and may further include: an authentication unit that: verifies first authentication information that is received by the receiving unit as an authentication request, the first authentication information being used by the server device to authenticate the terminal device; and provides second authentication information that is used by the terminal device to authenticate the server device in the case where the first authentication information is verified as valid, wherein the request receiving unit may receive a finalization message for finalizing the mutual authentication together with the first request message.

With the above structure, since the server device and the terminal device perform plural transaction processes via a secure communication path that is established through the above authentication, it is possible to prevent spoofing which is masquerade as an authorized terminal device, message tampering, and message tapping, in addition to being able to achieve the above-described countermeasures for communication disconnection.

Here, in the terminal device, the transaction processes may be performed on a session that is same as a session on which the mutual authentication has been performed.

With the above structure, in the case where n transaction processes are performed, it is possible to reduce the number of sendings and receivings to n+2 times from some 4n times which is the number of sendings and receivings having been required to be carried out conventionally.

As described above, according to the terminal device and the server device of the present invention, it is possible to achieve all the functions, that is, the prevention of license tapping and tampering, the authentication of the party at the other end, and countermeasures for communication disconnection as well as to reduce the number of times sendings and receivings is carried out between the server device and the terminal device in the case where plural transaction processes are performed. Furthermore, it is possible to realize a protocol that requires the server device and the terminal device to manage and hold a small amount of information to achieve the above functions. Accordingly, it becomes possible to reduce the time the user has to wait until such user receives a response after making a request.

**Brief Description of Drawing**

FIG. 1 is a block diagram showing a structure of a content distribution system according to an embodiment of the present invention.
FIG. 2 is a block diagram showing a detailed structure of a security management/communication unit of a content distribution device according to an embodiment of the present invention.
FIG. 3 is a block diagram showing a detailed structure of a security management/communication unit of a user terminal according to an embodiment of the present invention.
FIG. 4 is a flowchart that describes processing related to the purchase of a content to be performed in the content distribution system according to an embodiment of the present invention.

FIG. 5 is a diagram that schematically shows an example of content-related information stored in a content right database 19.

FIG. 6 is a diagram that schematically shows an example of user information stored in a user database 18.

FIG. 7 is a diagram that schematically shows an example of information about rights owned by users stored in a user-owned right database 20.

FIG. 8 is a diagram that schematically shows an example of content information stored in a content database 21.

FIG. 9 is a flowchart that describes processing related to the use of a content to be performed in the content distribution system according to an embodiment of the present invention.

FIG. 10A is a diagram that illustrates four types of communication phases in which plural transaction processes are performed between the content distribution device 1 and the user terminal 3.

FIG. 10B is a diagram that illustrates the transition of the transaction identification bit in the case where plural transaction processes are normally performed between the content distribution device 1 and the user terminal 3.

FIG. 10C is a diagram that illustrates the transition of the transaction identification bit in the case where a response message fails to have been delivered from the content distribution device 1 to the user terminal 3.

FIG. 10D is a diagram that illustrates the transition of the transaction identification bit in the case where a request message fails to have been delivered from the user terminal 3 to the content distribution device 1.

FIG. 11 is a flowchart that describes processing to be performed by the user terminal 3 and the content distribution device 1 in an initial phase in content use processing performed in the content distribution system according to an embodiment of the present invention.

FIG. 12 is a flowchart that describes processing to be performed by the user terminal 3 before the start of a first command communication phase after the initial phase that is performed between the user terminal 3 and the content distribution device 1, in the content use processing performed in the content distribution system according to an embodiment of the present invention.

FIG. 13 is a flowchart that describes processing to be performed by the user terminal 3 and the content distribution device 1 in a first command communication phase in the content use processing performed in the content distribution system according to an embodiment of the present invention.

FIG. 14 is a flowchart that describes processing to be performed by the user terminal 3 and the content distribution device 1 in a command communication phase in the content use processing performed in the content distribution system according to an embodiment of the present invention.

FIG. 15 is a flowchart that describes processing to be performed by the user terminal 3 and the content distribution device 1 in a commit phase in the content use processing performed in the content distribution system according to an embodiment of the present invention.

**Best Mode for Carrying Out the Invention**

(First Embodiment)

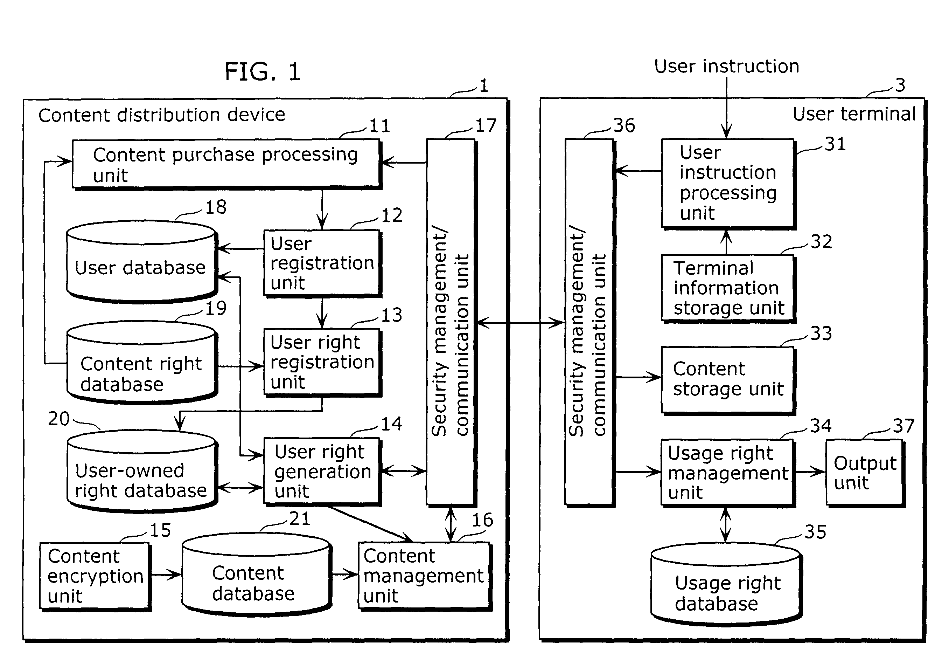

FIG. 1 is a block diagram showing a structure of a content distribution system according to an embodiment of the present invention. In FIG. 1, the content distribution system according to an embodiment of the present invention has a structure in which a content distribution device 1 being a service provider and a user terminal 3 being a user are connected via a transmission line such as a network.

The content distribution device 1 is comprised of a content purchase processing unit 11, a user registration unit 12, a user right registration unit 13, a user right generation unit 14, a content encryption unit 15, a content management unit 16, a security management/communication unit 17, a user database 18, a content right database 19, a user-owned right database 20, and a content database 21. Meanwhile, the user terminal 3 is comprised of a user instruction processing unit 31, a terminal information storage unit 32, a content storage unit 33, a usage right management unit 34, a usage right database 35, a security management/communication unit 36, and an output unit 37.

First, a description is given below of an overview of the content distribution device 1 and the user terminal 3 that make up the above content distribution system.

In the content distribution device 1, when content purchase processing is performed, the content purchase processing unit 11 sends, to the user terminal 3, information stored in the content right database 19 such as details, a usage condition, and the fee of each content, so as to present such information to the user. Furthermore, when the user purchases a content, the content purchase processing unit 11 obtains user information (user ID, terminal ID, user name, telephone number, or the like) from the user terminal 3, and performs necessary charging processing. In the content right database 19, one or more information regarding content use is stored for each content (moving images such as movie and TV broadcasting, still images such as book and printed matter, audio and music such as radio broadcasting and recitation, game, and the like).

The user registration unit 12 stores and registers, into the user database 18, the user information obtained by the content purchase processing unit 11. Information about users who have purchased contents are cumulatively stored in the user database 18.

The user right registration unit 13 stores and registers, into the user-owned right database 20, the information about the content purchased by the user as a right owned by the user, the information being provided from the content purchase processing unit 11 via the user registration unit 12. The usage rights of contents purchased by users are stored in the user-owned right database 20.

The user right generation unit 14 generates a usage right (a use rule and a content decryption key) to be sent to the user terminal 3 according to a content use request received from the user terminal 3.

The content encryption unit 15 encrypts the content to be sent to the user terminal 3, and registers the encrypted content into the content database 21.

The content management unit 16 retrieves, from the content database 21, the encrypted content to be sent to the user terminal 3, and passes it to the security management/communication unit 17.

The security management/communication unit 17 performs: authentication of the user terminal 3; secure communications (communications for preventing tapping and tampering and for authenticating the party at the other end) between the content distribution device 1 and the user terminal 3; and countermeasures for communication disconnection. Details about the structure of the security management/communication unit 17 and the communication protocol are given later.

The user instruction processing unit 31 in the user terminal 3 processes instructions (instructions including a content purchase request and a content use request) inputted by the user.

The above-described user information (user ID, terminal ID, user name, telephone number or the like) is stored in the terminal information storage unit 32.

The encrypted content obtained through purchase is stored in the content storage unit 33.

The usage right management unit 34 receives the usage right sent from the content distribution device 1 in response to a content use request, and performs corresponding processing on the content (decryption, reproduction based on the usage condition, or the like) according to the details of the received usage right. Such usage right is stored and managed in the usage right database 35.

The output unit 37, an example of which is a display device such as a display, outputs the content according to the processing performed by the usage right management unit 34.

The security management/communication unit 36 performs: authentication of the content distribution device 1; secure communications (communications for preventing tapping and tampering and for authenticating the party at the other end) between the content distribution device 1 and the user terminal 3; and countermeasures for communication disconnection. Details about the structure of the security management/communication unit 36 and the communication protocol are given later.

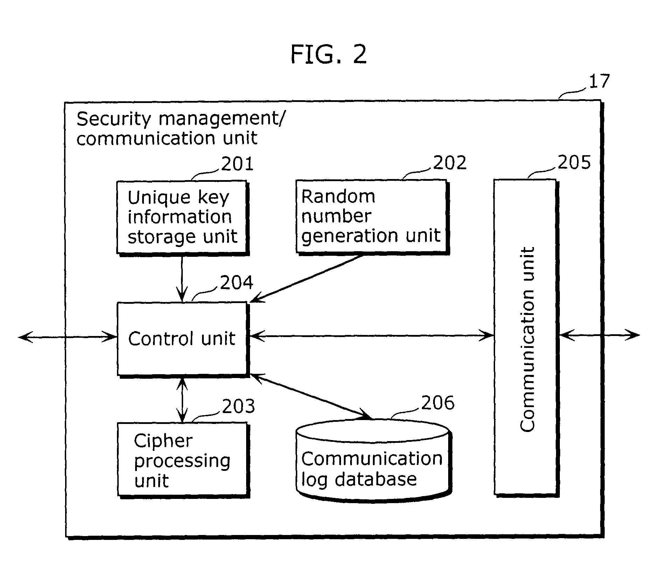

Next, referring to FIG. 2, a description is given of a detailed structure of the security management/communication unit 17 in the content distribution device 1. A unique key information storage unit 201 stores the following that are in accordance with public key cryptography: a server public key certificate that includes a public key KDs that is unique to the content distribution device 1; a private key KEs that is unique to the content distribution device 1; and a certificate authority public key certificate. The server public key certificate is a result of affixing a signature of the certificate authority to the public key KDs of the content distribution device 1. A general X. 509 certificate format is used as a format of the public key certificate. Details about the public key cryptography and the X. 509 format are given in ITU-T document X. 509 "The Directory: Public-key and attribute certificate frameworks".

A random number generation unit 202 generates a random number. The generated random number is passed to a control unit 204.

A cipher processing unit 203 performs data encryption, data decryption, signature generation, signature verification, the generation of parameters for session key generation, and the generation of a session key. Advanced Encryption Standard (AES) is used as an algorithm for data encryption and decryption, and Elliptic Curve Digital Signature Algorithm (EC-DSA) is used as an algorithm for signature generation and signature verification. Details about AES are provided in National Institute Standard and Technology (NIST), FIPS Publication 197, and details about EC-DSA are provided in IEEE 1363 Standard.

When encrypting and decrypting data, the cipher processing unit 203 outputs respective data obtained by performing encryption and decryption using an AES key that has been inputted, with the AES key, a plaintext and encrypted data as inputs. When generating and verifying a signature, the cipher processing unit 203 outputs signed data and a verification result, with data to be signed and data to be signature-verified as well as a private key and a public key as inputs. When generating a parameter for session key generation, the cipher processing unit 203 outputs a Diffie-Hellman parameter, with a random number as an input. When generating a session key, the cipher processing unit 203 outputs a session key, with the random number and the Diffie-Hellman parameter as inputs. Here, Elliptic Curve Diffie-Hellman (EC-DH) is used for session key generation. Details about EC-DH algorithm is given in the above-mentioned IEEE1363 Standard.

The control unit 204 checks authentication processing performed on the user terminal 3, encryption/decryption and tampering of data that is sent/received to and from the user terminal 3. Furthermore, the control unit 204 performs communication disconnection countermeasure processing by assigning a 1-bit transaction identification bit to a transaction, and by storing, into a communication log database 206, such transaction identification bit and communication step information. Here, a transaction refers to a process unit such as "obtainment of a usage right" and "returning of the usage right".

A communication unit 205 communicates with the security management/communication unit 36 of the user thermal 3.

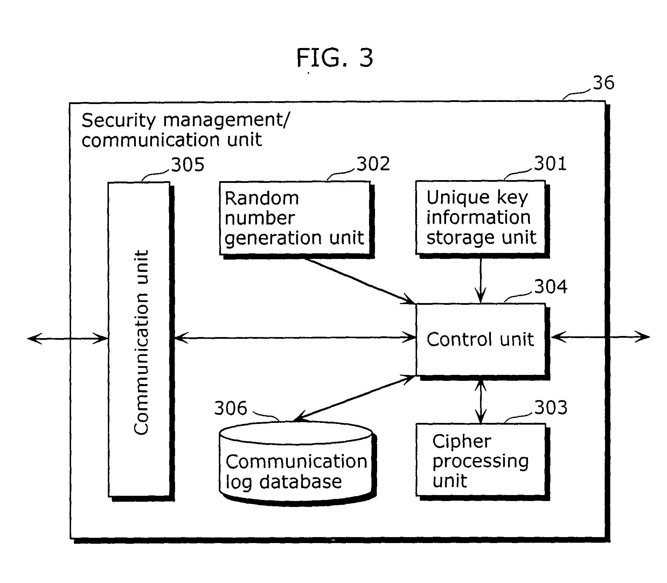

Next, referring to FIG. 3, a description is given of a detailed structure of the security management/communication unit 36 in the user terminal 3. A unique key information storage unit 301 stores the following that are in accordance with public key cryptography: a terminal public key certificate that includes a public key KDc that is unique to the user terminal 3; a private key KEc that is unique to the user terminal 3; and a certificate authority public key certificate. The terminal public key certificate is a result of affixing a signature of the certificate authority to the public key KDc of the user terminal 3. A general X. 509 certificate format is used as a format of the public key certificate, as in the case of the content distribution device 1.

A random number generation unit 302 generates a random number. The generated random number is passed to a control unit 304.

A cipher processing unit 303 performs data encryption, data decryption, signature generation, signature verification, generation of parameters for session key generation, and generation of a session key. Inputs and outputs to and from the cipher processing unit 303 are the same as those of the cipher processing unit 203 of the content distribution device 1.

The control unit 304 checks authentication processing performed on the content distribution device 1, encryption/decryption and tampering of data that is sent/received to and from the content distribution device 1. Furthermore, the control unit 304 performs communication disconnection countermeasure processing by storing, into a communication log database 306, the transaction identification bit and communication step information generated by the content distribution device 1.

A communication unit 305 communicates with the security management/communication unit 17 of the user thermal 3.

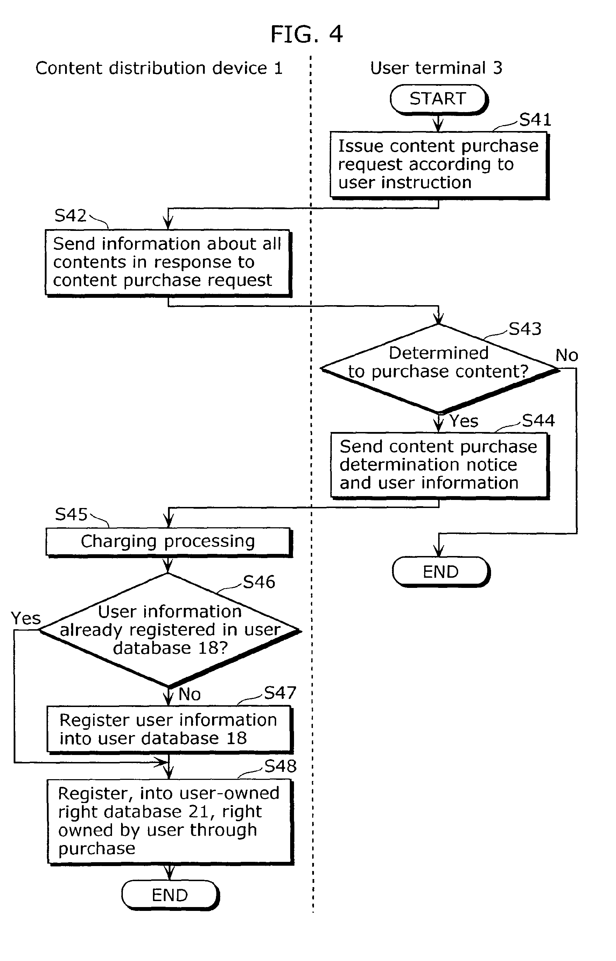

Next, referring to FIG. 4 to FIG. 12, a concrete description is given of a content distribution method to be performed in the content distribution system according to an embodiment of the present invention.

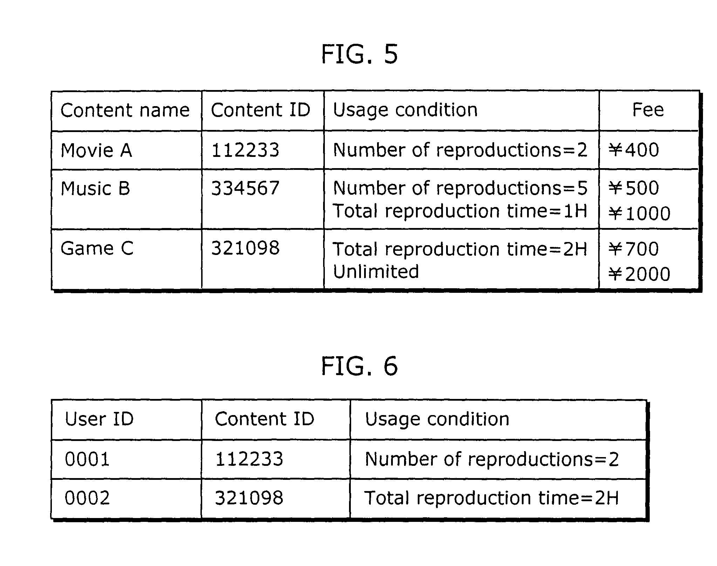

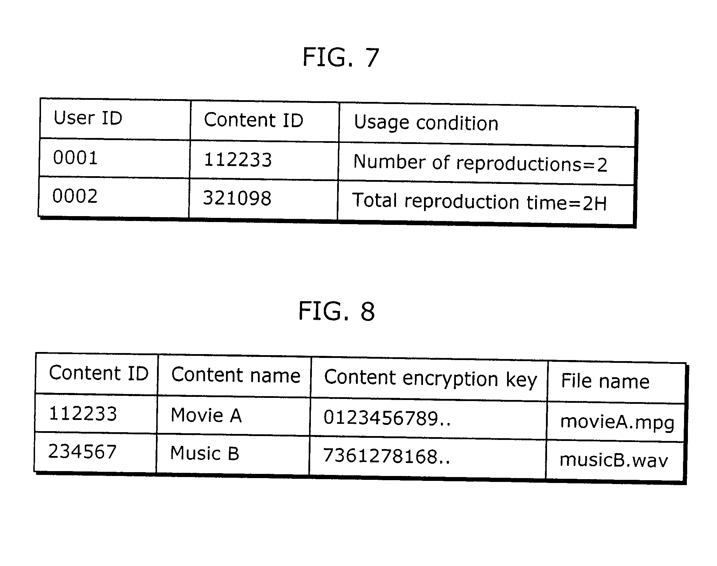

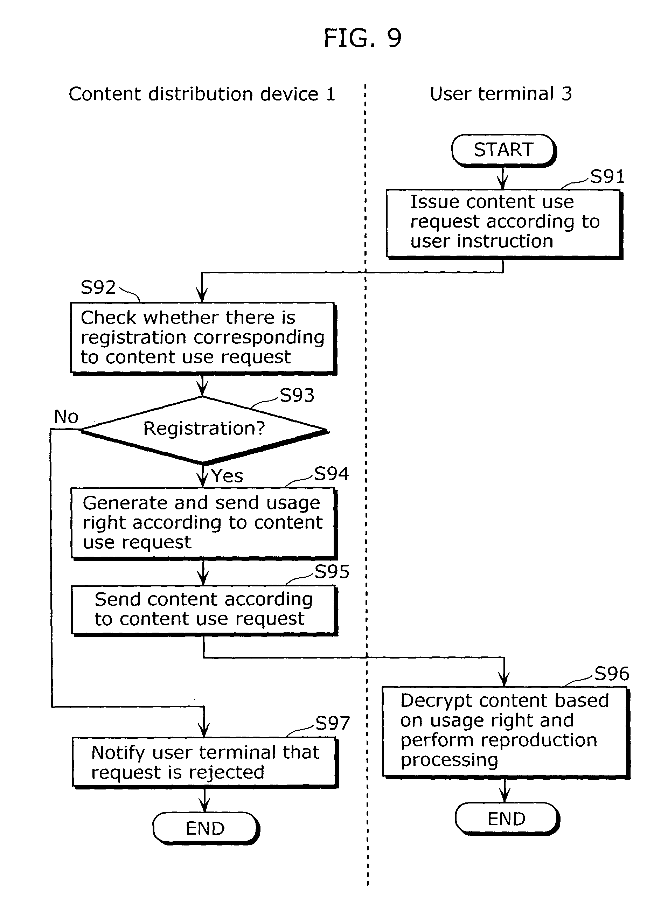

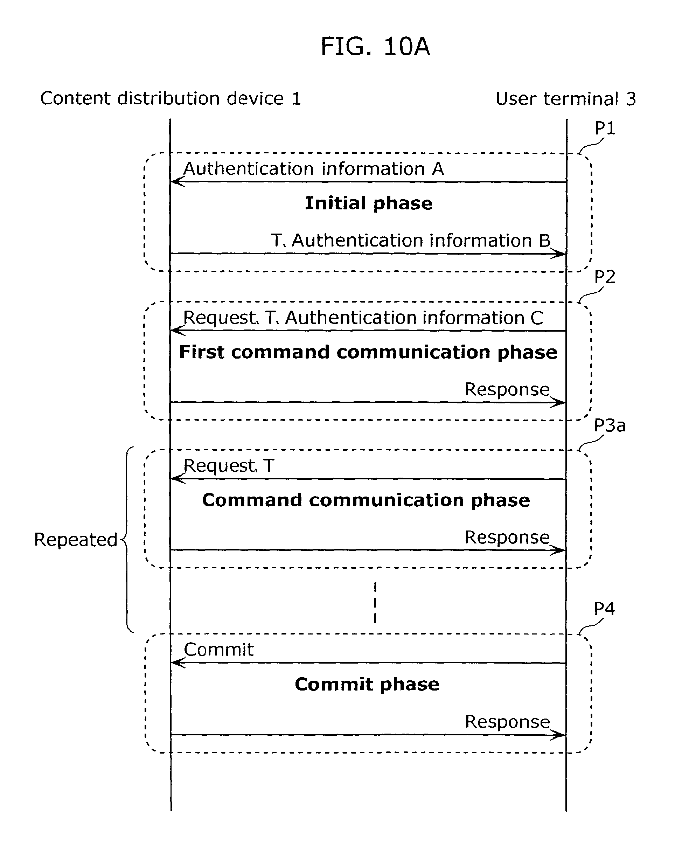

FIG. 4 is a flowchart that describes processing related to the purchase of a content to be performed in the content distribution system according to an embodiment of the present invention. FIG. 5 is a diagram that schematically shows an example of content-related information stored in the content right database 19. FIG. 6 is a diagram that schematically shows an example of user information stored in the user database 18. FIG. 7 is a diagram that schematically shows an example of information about rights owned by users stored in the user-owned right database 20. FIG. 8 is a diagram that schematically shows an example of content information stored in the content database 21. FIG. 9 is a flowchart that describes processing related to the use of a content to be performed in the content distribution system according to an embodiment of the present invention. FIGS. 10A to 10C, FIG. 11, and FIG. 12 are flowcharts that describe a secure communication and communication disconnection countermeasure processing to be performed in the content distribution system according to an embodiment of the present invention.

(1) Content Purchase Processing

Referring to FIG. 4, a description is given of processing to be performed in the content distribution system when a user purchases a content provided from the content distribution device 1.

In the user terminal 3, the user outputs, to the user instruction processing unit 31, an instruction concerning the purchase of a content. The user instruction processing unit 31 issues, to the content distribution device 1, a content purchase request according to the instruction via the security management/communication unit 36 (Step S41).

In the content distribution device 1, the content purchase processing unit 11 receives, via the security management/communication unit 17, the content purchase request issued by the user terminal 3. Upon receipt of the content purchase request, the content purchase processing unit 11 obtains, from the content right database 19, information about all contents stored therein, and sends it to the user terminal 3 via the security management/communication unit 17 (Step S42).

Here, information such as one shown in FIG. 5 is stored in the content right database 19, for example. In FIG. 5, Content name is the name of each content, and Content ID is a unique number to be assigned to identify each content. Usage condition indicates a specific rule under which it is possible to use each content in a predetermined data format used at ordinary times. One or more usage conditions and fees may be set to each content. The present example shows that a usage condition in the form of the number of reproductions is set to a content called Movie A, and that it becomes possible to view Movie A twice by paying 400 yen.

Note that in addition to the number of uses and use time described above, it is possible to use, as usage conditions, a variety of rules such as use period and whether or not it is possible to copy a content onto a storage medium and to print a content to a document.

Referring to FIG. 4 again, in the user terminal 3, in the case where the content-related information (FIG. 5) sent from the content purchase processing unit 11 is checked and the user has determined to purchase one of the contents (Step S43, Yes), the user instruction processing unit 31 sends, to the content distribution device 1, the user information stored in the terminal information storage unit 32, together with a content purchase determination notice (including information about the purchased content and a selected usage condition) via the security management/communication unit 36 (Step S44).

In the content distribution device 1, the content purchase processing unit 11 receives, via the security management/communication unit 17, the content purchase determination notice and the user information sent from the user terminal 3. Then, the content purchase processing unit 11 performs necessary charging processing as well as sending, to the user registration unit 12, the information about the purchased content and the user information (Step S45). Note that since charging processing is outside the focus of the present invention, a description thereof is not given.

The user registration unit 12 transfers, to the user right registration unit 13, the information about the purchased content and the user information sent from the content purchase processing unit 11, as well as storing and registering the user information into the user database 18 (Step S47). In the case where information that is the same as the user information sent from the content purchase processing unit 11 is already registered in the user database 18, the above described registration is not carried out (Step S46, Yes).

Information such as one shown in FIG. 6 is stored in the user database 18, for example. In FIG. 6, User ID is a unique number that is assigned to identify a user. User name is the name of a user. Terminal ID is a unique number that is assigned to identify a terminal and that is used in such cases as where one user owns plural terminals. Telephone number is used to identify a user. An example shown in FIG. 6 shows that information indicating that "a user named "Ichiro" with the user ID "0001" uses a terminal with the ID number "1234567" is registered as user information.

The user right registration unit 13 stores and registers, into the user-owned right database 20, a right to use the content to be owned by the user through purchase, based on the information about the purchased content and the user information provided from the user registration unit 12 (Step S48).

Information such as one shown in FIG. 7 is stored in the user-owned right database 20, for example. In FIG. 7, User ID is information registered in the user database 18. Content ID and Usage condition are information registered in the content right database 19.

Through the above processing, the purchase of the content and the registration of the user-owned right that accompanies such purchase complete.

(2) Content Use Processing

Next, referring to FIG. 9, a description is given of processing to be performed in the content distribution system when the user uses the content s/he has purchased after the user-owned right is registered into the user-owned right database 20 through the above-described processing.

In the user terminal 3, the user outputs, to the user instruction processing unit 31, an instruction concerning the use of the content. When this is done, the user givens an instruction as to how s/he intends to use the content. For example, the user gives an instruction indicating the number of times s/he wishes to use the content in the case where the usage condition of the purchased content is the number of times, and indicating minutes for which s/he wishes to use the content in the case where the usage condition of the purchased content is a length of time. The user instruction processing unit 31 sends, to the content distribution device 1, a content use request according to such instruction via the security management/communication unit 36 (Step S91). Note that the content use request is not necessarily generated according to a user instruction, and thus there may be the case where it is automatically generated inside the user terminal 3. For example, in the case where a usage condition of a content supported by the terminal 3 is fixed, it is possible to create a content use request inside the user terminal 3 without requiring the user to give an instruction. More specifically, in the case where the user terminal 3 is a terminal that is capable of obtaining and processing a usage right equivalent only to single-time use for each content use due to its limited storage capacity, the user instruction processing unit 31 automatically creates a content use request in accordance with such terminal, and issues it to the content distribution device 1. Such content use request includes the details of the above instruction, the user ID, the terminal ID, and the content ID.

In the content distribution device 1, the user right generation unit 14 receives the content use request sent from the user terminal 3 via the security management/communication unit 17. Upon receipt of the content use request, the user right generation unit 14 checks whether or not information corresponding to such request is registered, by reference to the user database 18 and the user-owned right database 20 (Step S92). More specifically, the user right generation unit 14 first checks whether or not the user ID and the terminal ID included in the content use request is registered in the user database 18. When judging that it is registered, the user right generation unit 14 then checks whether or not the content ID included in the content use request and the usage condition for the user ID according to the request are registered in the user-owned right database 20.

When judging that information corresponding to the content use request is registered, as a result of the check performed in the above Step S92 (Step S93, Yes), the user right generation unit 14 generates a usage right according to the content usage request, and sends it to the user terminal 3 via the security management/communication unit 17 (Step S94). Furthermore, the user right generation unit 14 notifies the content management unit 16 of the content ID included in the content use request. The content management unit 16 extracts the content corresponding to the content ID from the content database 21, and sends it to the user terminal 3 via the security management/communication unit 17 (Step S95).

Meanwhile, when judging that information corresponding to the content use request is not registered, as a result of the check performed in the above Step S92 (Step S93, No), the user right generation unit 14 notifies the user terminal 3, via the security management/communication unit 17, that the content use request is rejected (Step S97).

Here, a usage condition is generated in the above Step S94 in the manner as described below. It is assumed that the registration details stored in the user-owned right database 20 becomes as shown in FIG. 7 as a result of the user with the user ID "0001" purchasing a content in advance.

Also assume the case where such user has sent a content use request indicating that such user wishes to use the content with the content ID "112233" for one time. In this case, since the usage condition registered in the user-owned right database 20 is two times, the user right generation unit 14 generates a usage right that includes information for providing the number of reproductions=1 as requested and that includes the decryption key of the content. Furthermore, at the same time of generating such usage right, the user right generation unit 14 updates the registration details by decrementing by one the number of times indicated by the usage condition registered in the user-owned right database 20 (decremented from 2 to 1 in an example shown in FIG. 7). However, the user right generation unit 14 does not update the registration details in the case where a restart transaction is instructed by the security management/communication unit 17 in communication disconnection countermeasure processing. Details about communication disconnection countermeasure processing are given later.

Note that the user right generation unit 14 may previously store the generated user right on the assumption that a restart transaction is to be issued by the communication disconnection countermeasure processing. This saves the trouble of generating a user right again when a restart transaction is issued.

Note that in the case where there becomes no usage conditions that were provided through the purchase of the content, as a result of updating the information registered in the user-owned right database 20 every time a user right is issued to the user terminal 3, such user-owned right registered in the user-owned right database 20 may be either deleted or remain there. In the case where the user-owned right remains there, it becomes easier to handle such cases as where the same user has purchased the same content again and where a user returns a usage right s/he has obtained without using it.

Referring to FIG. 9 again, in the user terminal 3, the encrypted content sent from the content distribution device 1 is stored into the content storage unit 33, and the usage right is inputted to the usage right management unit 34. The usage right management unit 34 decrypts the content using the decryption key included in the obtained usage right, and performs, through the output unit 37, the reproduction or the like of the decrypted content according to the usage condition (Step S96). Note that the usage right that has been obtained is stored into the usage right database 35 to be used for managing the number of content reproductions, total use time, and the like.

Through the above processing, it is possible to distribute a content corresponding to a requested usage condition.

(3) Secure communication/Communication Disconnection Processing

First, referring to FIG. 10A, a description is given of an overview of authentication processing, processing for preventing usage right tapping and tampering, and communication disconnection countermeasure processing to be performed by the security management/communication units 17 and 18 in the case where a content use request (Step S91 in FIG. 9) and transmission of the usage right and content (Steps S94 and S95 in FIG. 9) are carried out for plural times in the above-described content use processing.

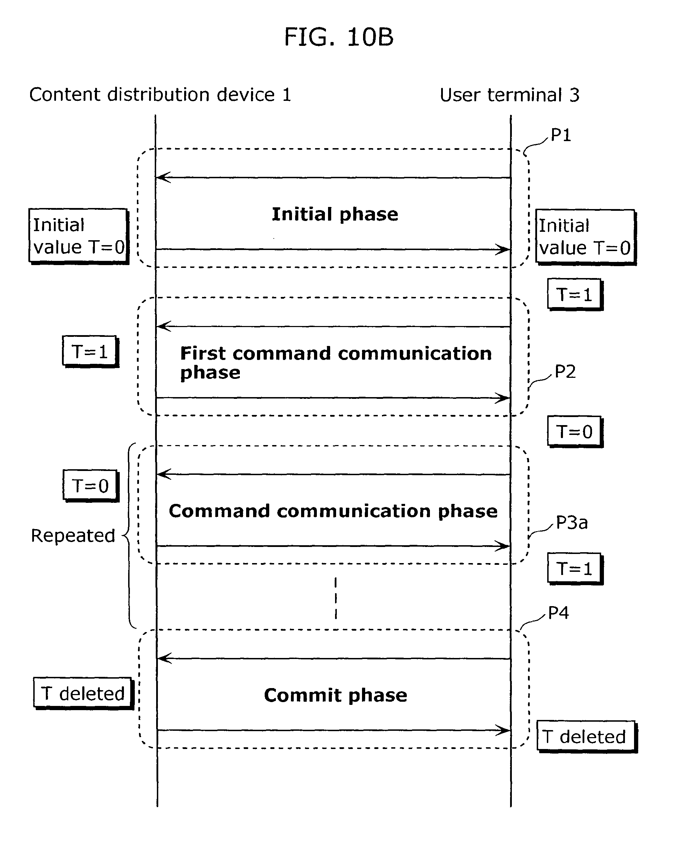

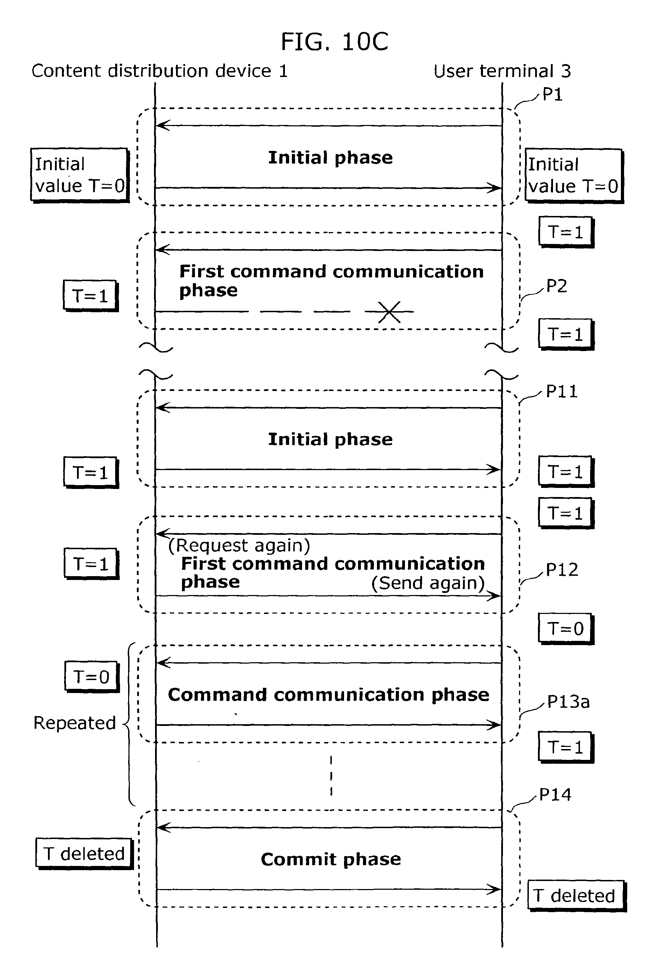

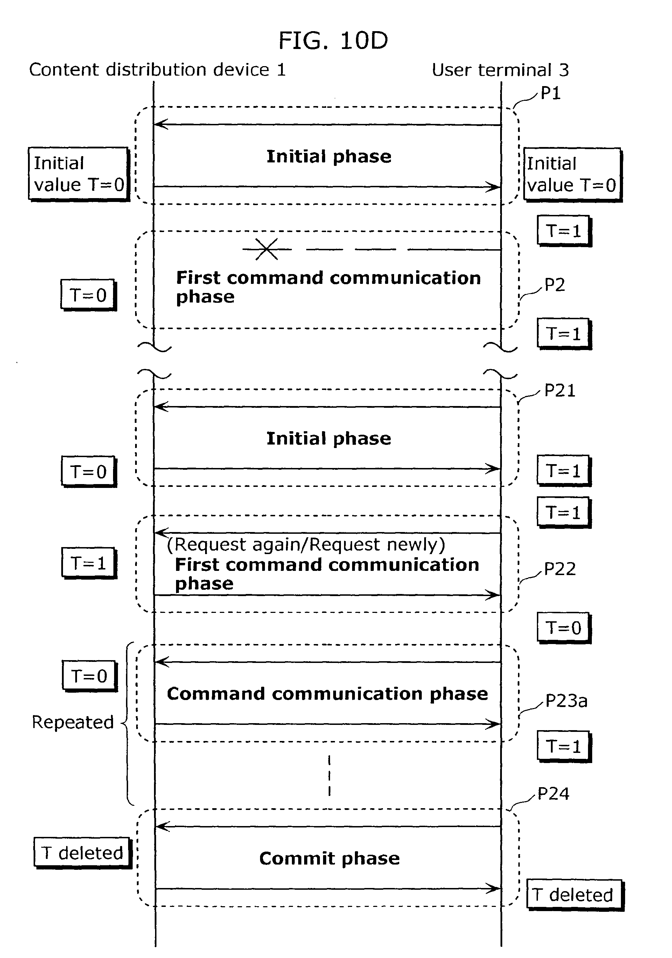

All communications performed between the user terminal 3 and the content distribution device 1 are each made up of a request message started from the user terminal 3 and a response message returned from the content distribution device 1 in response to the request message. A pair of a request and a response is refereed to as a phase, and secure communication/communication disconnection processing is made up of four types of phases as shown in FIG. 10.

An initial phase P1 is a phase for mutual authentication to be carried out only once at the beginning after a session is established between the user terminal 3 and the content distribution device 1. A description is given of such initial phase P1 in the respective cases where the preceding transaction of the initial phase P1 has ended normally and where it has ended abnormally due to a communication disconnection or the like.

In the initial phase P1, in the case where the preceding transaction has ended normally, the user terminal 3 sends, to the content distribution device 1, authentication information A used by the content distribution device 1 to authenticate the user terminal 3 as a first request message. After verifying the authentication information A, the content distribution device 1 sends authentication information B used by the user terminal 3 to authenticate the content distribution device 1. When this is done, the content distribution device 1 sends, to the user terminal 3, the initial value (e.g., 0) of a transaction identification bit T together with the authentication information B. After the user terminal 3 verifies the authentication information B, authentication information C for finalizing the mutual authentication is not to be sent individually but together with a request message for the following first command communication phase 2. Meanwhile, in the case where the preceding transaction has ended abnormally due to a communication disconnection or the like, the following points are different from the above-described processing to be performed in the case where the preceding transaction has ended normally: the value of the transaction identification bit T sent from the content distribution device 1; and that a transaction is to be restarted. In other words, the content distribution device 1 sends the value of the transaction identification bit used in the transaction that has not ended normally as it is (without inverting it). Furthermore, the content distribution device 1 regards the next request message as a request for a restart transaction to be carried out for the preceding transaction that has abnormally ended.

The first command communication phase P2 is a phase that is carried out only once following the initial phase P1. The first transaction is processed in the first command communication phase P2. In this first command communication phase P2, the user terminal 3 sends the authentication information C and the transaction identification bit T together with a request message. The value of the transaction identification bit T to be sent here is (i) the value that is obtained by inverting the transaction identification bit sent from the content distribution device 1, in the case where the preceding transaction process has completed normally, and (ii) the value that was used in the preceding (suspended) transaction, in the case where the preceding transaction process has not completed normally. In the case where the transaction identification bit is inverted, the content distribution device 1 sends, to the user terminal 3, a response message corresponding to the request message, judging that a new transaction has started. Meanwhile, in the case where the transaction identification bit is not inverted, the content distribution device 1 sends, to the user terminal 3, the same response message as that of the preceding transaction, judging that it is a restart transaction. The user terminal 3 which has received the response message normally transitions to a commit phase P4 by sending a commit message, in the case of not performing transaction processes successively. Meanwhile, the user terminal 3 which has received the response message normally sends a request message for the following command communication phase P3a and the transaction identification bit T without sending a commit message, in the case of performing transaction processes successively.

The command communication phase (P3a and the like) is a phase that takes place in the case where two or more transactions are processed in the same session. In other words, the command communication phase P3a is used in the case where a content use request and transmission of the content right and content are carried out for plural times. The command communication phase P3 does not take place in the case where a content use request and transmission of the content right and content are carried out only once. The command communication phase P3 is repeated by the number of times equivalent to the number of transactions that follow the first transaction. In this command communication phase P3a, the transaction identification bit T is sent, instead of a commit message, together with a request message for the following command communication phase (P3b), without sending any commit messages.

Commit phase is a phase in which the content distribution device 1 finalizes the completion of the transaction processes after all of such transaction processes end.

FIG. 10B is a diagram that illustrates the transition of the transaction identification bit T in the case where plural transaction processes are performed between the content distribution device 1 and the user terminal 3 without any communication disconnections in the four communication phases shown in FIG. 10A.

The initial value (e.g., T=0) of the transaction identification bit T is sent from the content distribution device 1 to the user terminal 3 together with a response for the initial phase P1. Each of the content distribution device 1 and the user terminal 3 holds the initial value. This transaction identification bit T is inverted in the user terminal 3 when the transaction process completes.

The user terminal 3 inverts the transaction identification bit T (T=1) upon receipt of the transaction identification bit T and the authentication information C as a response for the initial phase P1. This inversion indicates that there is no abnormal transaction in particular.

In the following first command communication phase P2, when receiving a response normally, the user terminal 3 inverts the transaction identification bit T (T=0), judging that the transaction process has completed. In the following first command communication phase P3a, when receiving a response normally, the user terminal 3 inverts the transaction identification bit T (T=1), judging that the transaction process has completed. As described above, the user terminal 3 inverts the transaction identification bit T in the case of normally receiving a response.

Since the inverted transaction identification bit T is sent together with a request message for the following command communication phase, this sending serves as a notification to the content distribution device 1 that a transaction process in the user terminal 3 has completed.

In the first command communication phase P2, the content distribution device 1 compares the initial value T (=0) which it holds and the transaction identification bit T (=1) which it has received together with the request message. When they do not match (when the received transaction identification bit is inverted), the content distribution device 1 judges that the transaction process of the user terminal 3 in the preceding suspended transaction has been completed, and then holds the received transaction identification bit T (1). Accordingly, the transaction identification bit T held inside the content distribution device 1 is to be updated as well.

Similarly, in the command communication phase P3a, the content distribution device 1 compares the initial value T (=1) which it holds and the transaction identification bit T (=0) which it has received together with the request message. When they do not match (when the received transaction identification bit is inverted), the content distribution device 1 judges that the transaction process of the user terminal 3 in the first command communication phase P2 has been completed, and then holds the received transaction identification bit T (=0). Accordingly, the transaction identification bit T held inside the content distribution device 1 is to be updated as well. The same processing is to be performed also in the case where successive command communication phases follow.

After the completion of the last command communication phase, a commit message is sent from the user terminal 3 to the content distribution device 1. This marks the start of a commit phase P4. The content distribution device 1 deletes the transaction identification bit T which it holds upon receipt of the commit message. The user terminal 3 deletes the transaction identification bit T upon receipt of a response message to the commit message. As described above, successive transaction processes are performed in a single session.

FIG. 10C is a diagram that illustrates the transition of the transaction identification bit T in the case where plural transaction processes are not performed normally between the content distribution device 1 and the user terminal 3. This drawing shows the case where the user terminal 3 has failed to receive the response message sent by the content distribution device 1 in the first command communication phase P2 due to a communication disconnection or the like.

In the case of failing to receive the response message normally, the user terminal 3 restarts the communication from the initial phase again, in order to restart the suspended transaction.

At the starting point of the initial phase P11 shown in this drawing, the transaction identification bit T of each of the content distribution device 1 and the user terminal 3 equals to 1. In the initial phase P11, since the transaction identification bit T (=1) is stored inside the content distribution device 1 which has received the authentication information A, it sends such transaction identification bit T (=1) and the authentication information B to the user terminal 3. The user terminal 3 which receives them judges that the preceding request message which it sent in the suspended transaction has been delivered to the content distribution device 1 but a response message to such request message fails to have been delivered to the user terminal 3, because the transaction identification bit T (=1) which it has received and the transaction identification bit T (=1) which it holds match. In this case, the content distribution device 1 also judges that the transaction is in a state of suspension since the previously sent request message has been delivered to it. Furthermore, the user terminal 3 stores the transaction identification bit which it has received without inverting it since the preceding transaction is being suspended.

In the following first command communication phase P12, the user terminal 3 sends again a request message with the same contents as that of the previously sent request message, together with the transaction identification bit T (=1). The content distribution device 1 which has received it judges that the current transaction is a restart transaction of the suspended transaction, because the transaction identification bit T (=1) which it has received and the transaction identification bit T (=1) which it internally holds match. In this case, since the transaction has not completed yet, the content distribution device 1 does not invert the transaction identification bit which it internally holds. Furthermore, the content distribution device 1 is to send again a response message to the request message.

The subsequent command communication phases are the same as those shown in FIG. 10B.

FIG. 10D is a diagram that illustrates the transition of the transaction identification bit in the case where a transaction process is not performed normally between the content-distribution device 1 and the user terminal 3. Unlike FIG. 10C, this drawing shows the case where the content distribution device 1 has failed to normally receive a request message that precedes a response message in the first command communication phase P2.

In the case of failing to receive a response message normally, the user terminal 3 restarts the communication again from the initial phase in order to restart the transaction that is suspended.

At the starting point of the initial phase P12 shown in this drawing, the transaction identification bits T of the content distribution device 1 and the user terminal 3 equal to 0 and 1, respectively. In the initial phase P12, since the transaction identification bit T (=0) is stored inside the content distribution device 1 which has received the authentication information A, it sends such transaction identification bit T (=0) and the authentication information B to the user terminal 3. The user terminal 3 which has received them judges that the preceding request message which it sent in the suspended transaction fails to have been delivered to the content distribution device 1, because the transaction identification bit T (=0) which it has received and the transaction identification bit T (=1) which it holds does not match. In this case, the content distribution device 1 does not judge that the transaction is in a state of suspension since the previously sent request message fails to have been delivered to it. In contrast, the user terminal 3 can judge that the transaction is suspended because of the request message having been undelivered. Furthermore, the user terminal 3 stores the transaction identification bit without inverting it since the preceding transaction is being suspended.

In the following first command communication phase P12, the user terminal 3 may send again a request message with the same contents as that of the previously sent request message, together with the transaction identification bit T (=1), or may send a new request message. This is because the user terminal 3 is of the judgment that the transaction is suspended because of the request message having been undelivered. That is to say, this is because the content distribution device 1 will handle any request message as a new transaction. When the user terminal 3 sends a request message again or a new message, the content distribution device 1 judges that the current transaction is a new transaction, because the transaction identification bit T (=1) which it has received and the transaction identification bit T (=0) which it holds does not match, and stores the received transaction identification bit T (=1) (this is, T held by the content distribution device 1 is inverted). Furthermore, the content distribution device 1 sends a response message according to the request message.

The subsequent communication phase are the same as those shown in FIG. 10B.

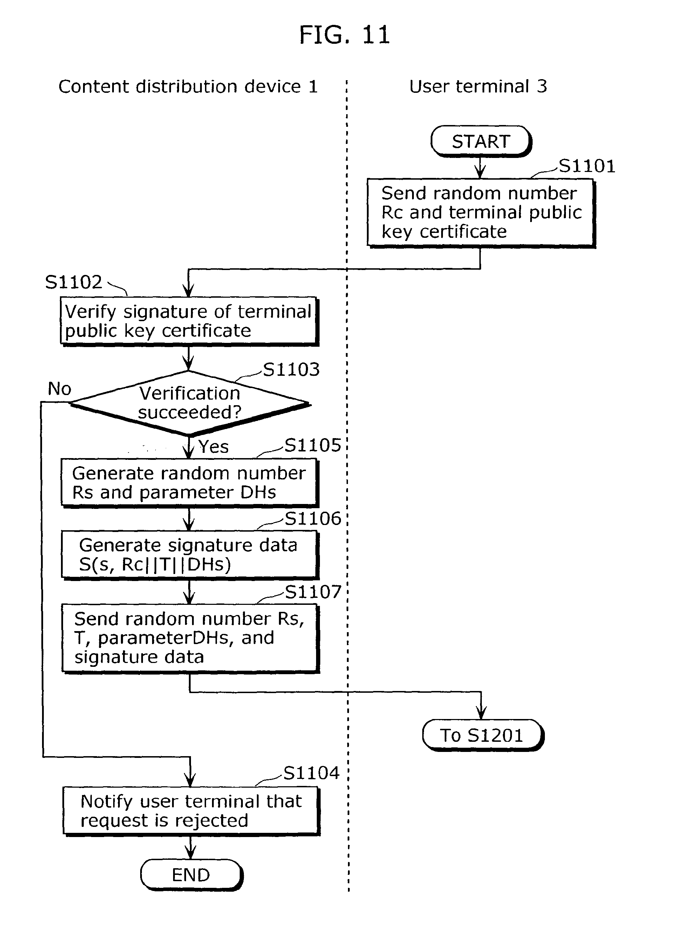

Next, referring to FIG. 11 to FIG. 15, a description is given of processing to be performed in each phase when a content use request (Step S91 in FIG. 9) and transmission of the content right and content (Step S94 and S95 in FIG. 9) are carried out for plural times.

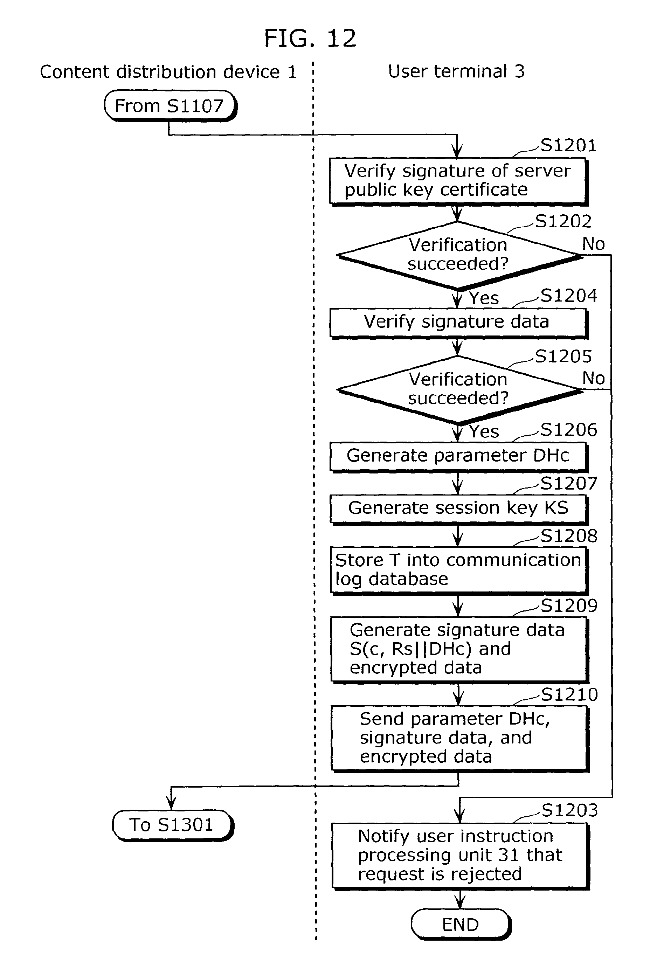

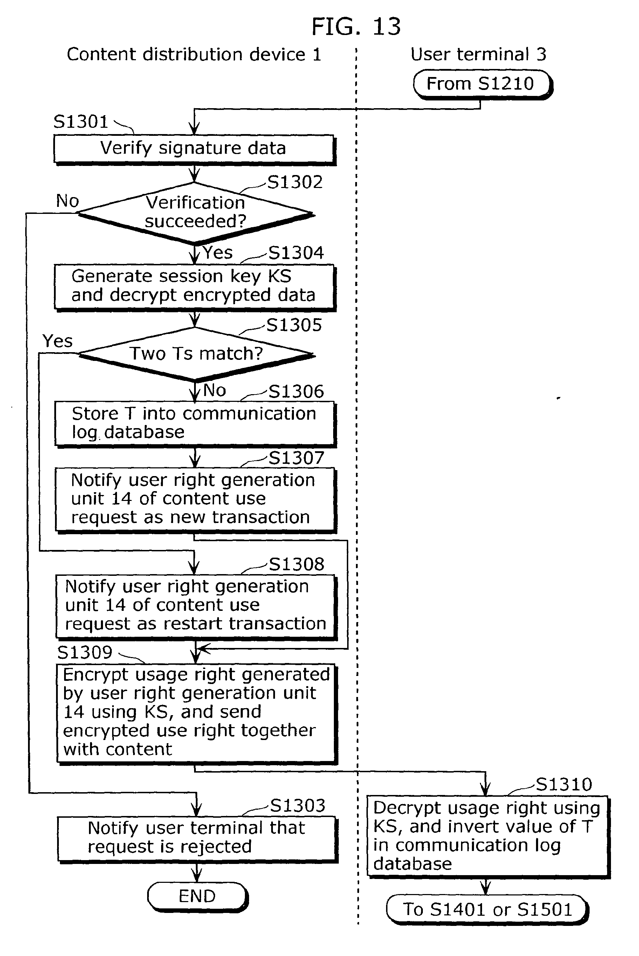

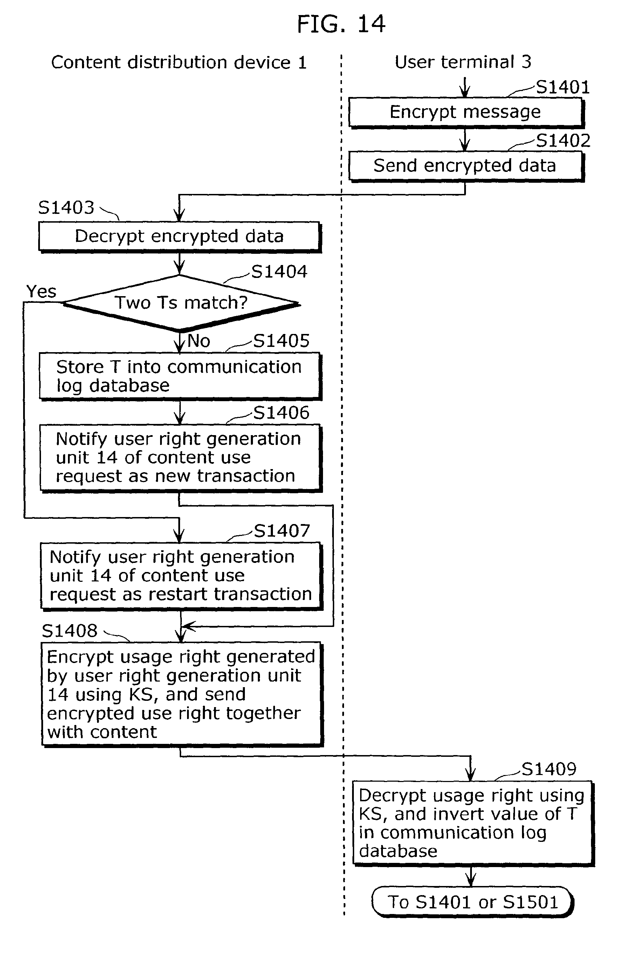

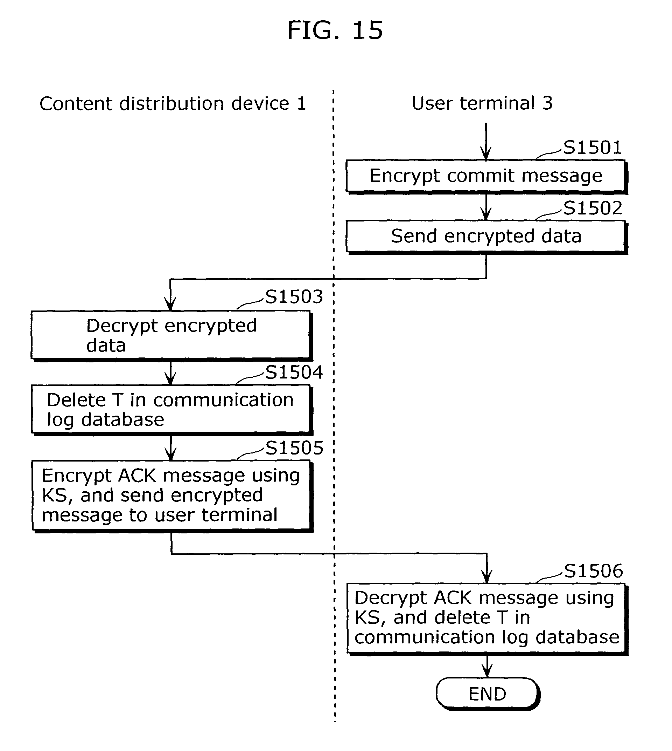

FIG. 11 describes processing to be performed by the user terminal 3 and the content distribution device 1 in the initial phase in the content use processing. FIG. 12 describes processing to be performed by the user terminal 3 after the initial phase, before the start of a first command communication phase. FIG. 13 describes processing to be performed in the first command communication phase. FIG. 14 describes processing to be performed in a command communication phase. FIG. 15 describes processing to be performed in a commit phase.

First, referring to FIG. 11, a description is given of processing to be performed by the user terminal 3 and the content distribution device 1 in the initial phase. The control unit 304 included in the security management/communication unit 36 of the user terminal 3 sends a random number Rc generated by the random number generation unit 302 and the terminal public key certificate stored in the unique information storage unit 301 to the content distribution device 1 via the communication unit 305, in the case where it is instructed by the user instruction processing unit 31 to send a content use request (Step S1101).

When receiving the random number Rc and the terminal public key certificate from the user terminal 3 via the communication unit 205, the control unit 204 included in the security management/communication unit 17 of the content distribution device 1 first verifies the signature of such terminal public key certificate by providing, to the cipher processing unit 203, the certificate authority public key certificate stored in the unique information storage unit 201 and the terminal public key certificate (Step S1102).

In the case where the verification has failed as a result of the signature verification in Step S1102 (Step S1103, No), the control unit 204 notifies the user terminal 3, via the communication unit 205, that the request is rejected (Step S1104).

Meanwhile, in the case where the verification has succeeded as a result of the signature verification in Step S1102 (Step S1103, Yes), the control unit 204 causes the random number generation unit 202 to generate random numbers Rs and Rs2 and causes the cipher processing unit 203 to generate a Diffie-Hellman parameter, using the random number Rs2 as an input (Step S1105).

Furthermore, the control unit 204 searches the communication log database 206 to check whether or not the transaction identification bit is stored. When the result of the search is that the transaction identification bit is not stored (i.e., it is deleted in the preceding commit phase, and the transaction ended normally), the control unit 204 sets the transaction identification bit T to the initial value 0, whereas in the other case, it sets the transaction identification bit T to the value of the transaction identification bit that is stored. After this, the control unit 204 causes the cipher processing unit 203 to generate a signature (Equation 2) for data (Equation 1) that results from concatenating the random number Rc received from the user terminal 3, the transaction identification bit T, and DHs generated in Step S1105 (Step S1106). Here, the transaction identification bit T is a bit that is associated with a content request transaction to be performed in the first command communication phase that follows the present initial phase. In the case where a communication disconnection occurs afterwards, the suspended transaction is restarted using this transaction identification bit T.

$$Rc||T||DHs \quad \text{(Equation 1)}$$

$$S(s, Rc||T||DHs) \quad \text{(Equation 2)}$$

The control unit 204 sends the random number Rs and Diffie-Hellman parameter DHs generated in Step S1105, the transaction identification bit T, the server public key certificate stored in the unique key information storage unit 201, and the signature (Equation 2) generated in Step S1106, to the user terminal 3 via the communication unit 205 (Step S1107).

Next, referring to FIG. 12, a description is given of processing to be performed by the user terminal 3 after the initial phase, before the start of a first command communication phase.

When receiving the random number Rs, the transaction identification bit T, the Diffie-Hellman parameter DHs, the server public key certificate, and the signature data from the content distribution device 1 via the communication unit 305, the control unit 304 included in the security management/communication unit 36 of the user terminal 3 first verifies the signature of such server public key certificate by providing, to the cipher processing unit 303, the certificate authority public key certificate stored in the unique information storage unit 301 and the server public key certificate (Step S1201).

In the case where the verification has failed as a result of the signature verification in Step S1201 (Step S1202, No), the control unit 304 notifies the user instruction processing unit 31 that the content use request is rejected (Step S1203).

Meanwhile, in the case where the verification has succeeded as a result of the signature verification in Step S1201 (Step S1202, Yes), the control unit 304 generates data (Equation 3) that results from concatenating the random number Rc generated in Step S1101 and the transaction identification bit T and DHs that are received from the content distribution device 1 in Step S1107, and input, to the cipher processing unit 303, such data (Equation 3), the signature data (Equation 2) and the server public key certificate that are received from the content distribution device 1 in Step S1107, so as to verify the signature data (Equation 2) (Step S1204).

$$Rc||T||DHs \qquad \text{(Equation 3)}$$

In the case where the verification has failed as a result of the signature verification in Step S1204 (Step S1205, No), the control unit 304 notifies the instruction processing unit 31 that the content use request is rejected (Step S1203).

Meanwhile, in the case where the verification has succeeded as a result of the signature verification in Step S1204 (Step S1205, Yes), the user terminal 3 can know that it is surely communicating with the content distribution device 1 (verification of the party at the other end). The control unit 304 causes the random number generation unit 302 to generate a random number Rc2 and causes the cipher processing unit 303 to generate a Diffie-Hellman parameter DHc, using the generated random number Rc2 as an input (Step S1206).

Furthermore, the control unit 304 causes the cipher processing unit 303 to generate a session key KS from the DHs received from the content distribution device 1 in Step S1107 and the Rc2 generated in Step S1206 (Step S1207).

After this, the control unit 304 stores, into the communication log database 306, the transaction identification bit T received from the content distribution device 1 in Step S1107 (Step S1208). Accordingly, a content use request transaction corresponding to the transaction communication bit T is started, and the fact that it is a state for waiting for a response is stored into the database.

The control unit 304 causes the cipher processing unit 303 to generate a signature (Equation 5) for data (Equation 4) that results from concatenating the random number Rs received from the content distribution device 1 in Step S1107 and the DHc generated in Step S1206, to invert the transaction identification bit stored in Step S1108 using the session key KS generated in Step S1207, and to encrypt the inverted transaction identification bit T and a content use request message M (Step S1209). The content use request message includes at least the content identifier of the content to be used. A sequence number Seq and a hash value h are added to the encrypted data (Equation 6). A hash value is assigned to the sequence number Seq and the content use request message M. The sequence number is a serial number which is reset to 0 when a session starts, i.e., when the initial phase starts, and which is incremented by 1 every time a message is sent and received.

$$Rs||DHc \qquad \text{(Equation 4)}$$

$$S(c, Rs||DHc) \qquad \text{(Equation 5)}$$

$$E(KS, Seq||T||M||h) \qquad \text{(Equation 6)}$$

The control unit 304 sends the DHc generated in Step S1206, and the signature (Equation 5) and the encrypted data (Equation 6) that are generated in Step S1209, to the content distribution device 1 via the communication unit 305 (Step S1210).

Next, referring to FIG. 13, a description is given of processing to be performed in the first command communication phase.

When receiving the Diffie-Hellman parameter DHc, the signature data, and the encrypted data from the user terminal 3 via the communication unit 205, the control unit 204 included in the security management/communication unit 17 of the content distribution device 1 generates data (Equation 7) that results from concatenating the random number Rs generated in Step S1105 and the DHc received from the user terminal 3 in Step S1210, and inputs, to the cipher processing unit 203, such generated data (Equation 7), the signature data received from the user terminal 3 in Step S1210, and the terminal public key certificate, so as to verify the signature data (Step S1301).

$$Rs||DHc \qquad \text{(Equation 7)}$$

In the case where the verification has failed as a result of the signature verification in Step S1301 (Step S1302, No), the control unit 204 notifies the user terminal 3, via the communication unit 205, that the content use request is rejected (Step S1303).

Meanwhile, in the case where the verification has succeeded as a result of the signature verification in Step S1301 (Step S1302, Yes), the content distribution device 1 can know that it is surely communicating with the user terminal 3 (verification of the party at the other end). The control unit 204 causes the cipher processing unit 203 to generate a session key KS from the DHc received from the user terminal 3 in Step S1210 and the Rs2 generated in Step S1105. After this, the control unit 204 inputs, to the cipher processing unit 203, the encrypted data received in Step S1210 and the generated KS so as to decrypt the encrypted data and check the sequence number and the hash value (Step S1304).

Furthermore, the control unit 204 searches the communication log database to obtain the transaction identification bit. When the result of the search is that the transaction identification bit is not present or its value does not match that of the transaction identification bit T received in Step S1210 (Step S1305, No), the content distribution device 1 judges that the request message is for a new transaction, and the control unit 204 stores, into the communication log database 206, the transaction identification bit T received from the user terminal 3 in Step S1301 (Step S1306). Accordingly, the transaction identification bit T is to be inverted. Furthermore, the fact that the content use request transaction has completed up to this step, is stored into the database.

After this, the control unit 204 notifies the user right generation unit 14 of the content use request received from the user terminal 3 in Step S1210, as a new transaction (Step S1307).

Meanwhile, when the transaction identification bit is already present and its value match that of the transaction identification bit T received in Step S1210 (Step S1305, Yes), the control unit 204 judges that the transaction is suspended due to a communication disconnection or the like, and notifies the user right generation unit 14 of the content use request received from the user terminal 3 in Step S1210, as a restart transaction (Step S1308).

The control unit 204 causes the cipher processing unit 203 to encrypt the sequence number, the usage right generated by the user right generation unit 14, and their hash value, using the session key KS generated in Step S1304, and sends the resultant to the user terminal 3 via the communication unit 205 (Step S1309). Here, since the usage right to be set has been encrypted using the session key KS that is generable only by the content distribution device 1 and the user terminal 3, it is impossible for a third party to tap the usage right.

When receiving the encrypted data from the content distribution device 1 via the communication unit 305, the control unit 304 included in the security management/communication unit 36 of the user terminal 3 first causes the cipher processing unit 303 to decrypt the encrypted data using the session key KS so as to restore the sequence number, the usage right, and the hash value. After this, the control unit 304 checks the sequence number and the hash value, and notifies the usage condition(s) to the user instruction processing unit 31. Furthermore, the control unit 304 inverts the transaction identification bit stored in the communication log database 306 (Step S1310). This marks the completion of the transaction corresponding to the transaction identification bit T.

After this, the processing goes to Step S1401 when there is a subsequent transaction, whereas it goes to Step S1501 in the other case.

Next, referring to FIG. 14, a description is given of processing to be performed in a command communication phase.

The control unit 304 encrypts the transaction identification bit T stored into the content log database 306 and the content use request message M, using the session key KS generated in the initial phase (Step S1401). The content use request message includes at least the content identifier of the content to be used. A sequence number Seq and a hash value h are added to the encrypted data. A hash value is assigned to the sequence number Seq and the content use request message M.

The control unit 304 sends the encrypted data generated in Step S1401 to the content distribution device 1 via the communication unit 305 (Step S1402).

When receiving the encrypted data from the user terminal 3 via the communication unit 205, the control unit 204 included in the security management/communication unit 17 of the content distribution device 1 inputs, to the cipher processing unit 203, the encrypted data and the KS generated in the first command communication phase so as to decrypt the encrypted data and check the sequence number and the hash value (Step S1403).

Furthermore, the control unit 204 searches the communication log database to check whether or not the transaction identification bit T received from the user terminal 3 in Step S1402 and the transaction identification bit T stored into the communication log database match. When the result of the check is that they do not match (Step S1404, No), the control unit 204 changes the data stored in the communication log database 206 to T received from the user terminal 3 in Step S1402 (Step S1405). Accordingly, the transaction identification bit T is inverted. Furthermore, the fact that the content use request transaction has completed up to this step, is stored into the database.

After this, the control unit 204 notifies the user right generation unit 14 of the content use request received from the user terminal 3 in Step S1402, as a new transaction (Step S1406).

Meanwhile, when the transaction identification bit T and the transaction identification bit to be stored into the communication log database 206 match (Step S1404, Yes), the control unit 204 judges that the transaction is suspended due to a communication disconnection or the like, and notifies the user right generation unit 14 of the content use request received from the user terminal 3 in Step S1402, as a restart transaction (Step S1407).

The control unit 204 causes the cipher processing unit 203 to encrypt the sequence number, the usage right generated by the user right generation unit 14, and their hash value, using the session key KS generated in the first command communication phase, and sends the resultant to the user terminal 3 via the communication unit 205 (Step S1408). Here, since the usage right to be set has been encrypted using the session key KS that is generable only by the content distribution device 1 and the user terminal 3, it is impossible for a third party to tap the usage right.

When receiving the encrypted data from the content distribution device 1 via the communication unit 305, the control unit 304 included in the security management/communication unit 36 of the user terminal 3 first causes the cipher processing unit 303 to decrypt the encrypted data using the session key KS so as to restore the sequence number, the usage right, and the hash value. After this, the control unit 304 checks the sequence number and the hash value, and notifies the usage condition(s) to the user instruction processing unit 31. Furthermore, the control unit 304 inverts the transaction identification bit T stored in the communication log database 306 (Step S1409). This marks the completion of the transaction corresponding to the transaction identification bit T.

After this, the processing goes to Step S1401 when there is a subsequent transaction, whereas it goes to Step S1501 in the other case.

Finally, referring to FIG. 15, a description is given of processing to be performed in a commit phase.

The control unit 304 encrypts a commit message using the session key KS generated in the initial phase (Step S1501).

The control unit 304 sends the encrypted data generated in Step S1501 to the content distribution device 1 via the communication unit 305 (Step S1502).

When receiving the encrypted data from the user terminal 3 via the communication unit 205, the control unit 204 included in the security management/communication unit 17 of the content distribution device 1 inputs, to the cipher processing unit 203, the encrypted data and the KS generated in the first command communication phase so as to decrypt the encrypted data (Step S1503).

Furthermore, the control unit 204 deletes the transaction identification bit stored in the communication log database 206 (Step S1504).

The control unit 204 causes the cipher processing unit 203 to encrypt an ACK message using the session key KS generated in the first command communication phase, and sends the resultant to the user terminal 3 via the communication unit 205 (Step S1505).

When receiving the encrypted data from the content distribution device 1 via the communication unit 305, the control unit 304 included in the security management/communication unit 36 of the user terminal 3 first causes the cipher processing unit 303 to decrypt the encrypted data using the session key KS so as to restore the ACK message, and notifies the user instruction processing unit 31 that the commit processing has completed. After this, the control unit 304 deletes the transaction identification bit T stored in the communication log database 306 (Strep S1506).

Note that a transaction restart process to be performed after a communication disconnection is started in response to a transaction restart process request sent from the user instruction processing unit 31, and is restarted as a first command communication phase, after an initial phase is processed, using the transaction identification bit (the transaction identification bit stored in the communication log database) T corresponding to the transaction that is suspended due to a communication disconnection. The content use request message to be sent in this first command communication phase may be passed to the control unit 304 again by the user instruction processing unit 31 or may be stored by the control unit 304 into the communication log database at the time of storing the transaction identification bit thereto, so that such stored message can be used.

Through the above processing, it is possible to perform processing for authenticating the user terminal 3, processing for preventing usage right tapping and tampering, and communication disconnection countermeasure processing.

In the communication protocols presented in the present embodiment, the number of sendings and receivings required for processing "n" transactions is one sending and receiving in the initial phase, one sending and receiving in the first command communication phase, n minus one sending and receiving in the command communication phase, and one sending and receiving in the commit phase, which amounts to a total of n + two times.

Note that the encryption algorithm, session key sharing algorithm, and certificate format used in the present embodiment do not necessarily have to be those described above, as long as they have the equivalent functions. For example, TripleDES may be used as the data encryption algorithm. Furthermore, checksum values such as CRC may be used as a hash value added to the encrypted data. Moreover, common key cryptography may be used as the SAC protocol instead of public key cryptography.

In the present embodiment, although the terminal public key certificate is sent from the user terminal 3 in the initial phase (Step S1101 in FIG. 11), it may be sent in the first command communication phase (Step S1210 in FIG. 12). Accordingly, it becomes not necessary for the content distribution device 1 to hold therein the above data. In this case, the processing to verify the signature of the terminal public key certificate (Step S1102 in FIG. 11) performed by the content distribution device 1 is performed at the beginning of the first command communication phase (immediately before Step S1301 in FIG. 13).

Note that in Step S1107, the data sent from the content distribution device 1 to the user terminal 3 may include the random number Rc received from the user terminal 3. In other words, the data to be sent from the content distribution device 1 are the random number Rc, the random number Rs, the transaction identification bit T, the parameter DHs, and the signature data. Accordingly, it becomes not necessary for the user terminal 3 to hold therein the random number Rc. Similarly, the data sent from the user terminal 3 to the content distribution device 1 in Step S1210 may include the random number Rs received from the content distribution device 1. In other words, the data to be sent from the content distribution device 1 are the random number Rs, the parameter DHc, the signature data, and the encrypted data.

Although the present embodiment includes the processing performed by the user terminal 3 to authenticate the content distribution device 1, this authentication processing may be deleted if it is not particularly required.

In the present embodiment, although the judgment of whether the transaction identification bits match or not is made in the command communication phase, this judgment processing may be deleted if it is not particularly required. In this case, a transaction to be processed in the command communication phase is always processed as a new transaction.

In the present embodiment, although the transaction identification bit is sent from the content distribution device 1, this may be omitted. In other words, the processing performed by the content distribution device 1 in the initial phase and information about the transaction identification bit included in a message sent in the initial phase are omitted.

In the present embodiment, although registration details is not to be updated in the case where the generation of the user right in Step S1308 and Step S1407 is instructed by the security management/communication unit 17 as a restart transaction, it is also possible to evaluate the content use request again and to generate the user right again. Accordingly, it becomes possible to respond to changes that occur between when a new transaction is issued and when a restart transaction is issued. For example, while the generation and sending of a usage right was performed since it was before the use expiration date of the content at the time of issuing a new transaction, there would be the case where it is beyond such use expiration date when a request is made again as a restart transaction. In such case, no generation and issuing of a usage right is performed for the restart transaction.

Furthermore, the present embodiment may include processing for canceling a transaction that is in process due to a communication disconnection. In the case of performing cancellation processing, a cancellation message is sent from the user terminal 3 in a first command communication phase to be performed after communication disconnection, in response to an instruction by the user instruction processing unit 31, the cancellation message including the transaction identification bit T corresponding to a transaction for which a response is not yet received (the transaction identification bit T stored in the communication log database 306). The content distribution device 1 which has received the cancellation message notifies the user right generation unit 14 that it has received the cancellation message, so as to cause it roll back the state of the transaction in process to the state before the processing begins. After this, the content distribution device 1 sends an ACK message to the user terminal 3.

Suppose that two processes for processing a content use request performed between the content distribution device 1 and the user terminal 3 are Process A and Process B. In the case where a communication needs to be disconnected after the completion of Process A, authentication is performed again and a new session key is created again at the start of Process B in normal cases. However, if response time in Process B is wished to be reduced, it is also possible to previously store the session key of Process A both in the content distribution device 1 and the user terminal 3 to use it again, so that authentication processing in Process B can be excluded.

Note that in the present embodiment, the content distribution device 1 may set a limit on the use of a session key. For example, the content distribution device 1 notifies the user terminal 3 that the reuse of the session key is not possible in cases such as: where the number of reuses of the session key exceeds a prescribed upper limit; where a prescribed length of time has elapsed after the session key is first created; where a prescribed amount of communication data is exceeded after the session key is first created; where a predetermined content or usage right is distributed; and where a predetermined content or usage right is distributed to a predetermined user terminal 3. The user terminal 3 which has received a notice indicating that the reuse of the session key is not possible, creates a session key again, i.e., it restarts the communication from the initial phase again.

The present embodiment describes a protocol between the content distribution device 1 and the user terminal 3, but it is also applicable to license exchange between user terminals. For example, it is applicable to the transfer of a license between user terminals in a house. In this case, a group identifier indicating that they are user terminals in the same house is specified in advance or through the setting performed after the purchase. In the case where the protocol presented in the present embodiment are applied to the transfer of a license between user terminals, a terminal that transfers the license is considered as the content distribution device 1, whereas a terminal that receives the license is considered as the user terminal 3. When the transfer of a license is limited to the transfer within the same house, i.e., only to those with the same group identifier, the license receiving terminal sends the group identifier to the license distributing terminal to judge whether the license distributing terminal has the same group identifier or not, and sends the license only when the group identifiers are the same. Any method may be used to send the group identifier as long as such method is capable of preventing tapping, tampering, and spoofing. For example, the group identifier may be included in encrypted data to be sent in the first command communication phase. Furthermore, it is also possible to send a hash value of the group identifier without sending the group identifier itself. It is also possible to further provide, after the initial phase, a phase for sending a group identifier hash so as to send a group identifier hash encrypted with the session key.

Note that the components included in the content distribution system presented in the present embodiment may be implemented either as hardware or software.

As described above, according to the present invention, it is possible to provide a system and devices with which it is possible to (1) achieve all the functions, that is, the prevention of license tapping and tampering, the authentication of the party at the other end, and countermeasures for communication disconnection, (2) reduce the number of times sendings and receivings are carried out between a server device and a terminal device in the case where plural transaction processes are performed, and (3) realize a protocol that requires the server device and the terminal device to manage and hold a small amount of information to achieve the above functions. Accordingly, it becomes possible to provide a content distribution system that is capable of reducing the time the user has to wait until such user receives a response after making a request.

**Industrial Applicability**

The present invention is appropriate for use as a digital content distribution system including: a server device that provides a terminal device with a license for using a content, based on transaction processes including the receiving of a request message, the sending of a response message, and the receiving of a commit message for finalizing the completion of the transaction; and the terminal device that controls the use of the content based on the license obtained from the server device. For example, the following are appropriate as the server device: a distribution server of a service provider that distributes a digital content via the Internet; a broadcasting device that digitally broadcasts a digital content via broadcasting; and so forth, and the following are appropriate as the terminal device: a set-top box for receiving digital broadcasting; a content reproduction device and a recording device such as a digital TV, a DVD recorder, a hard disk recorder, and a personal computer; a compound device of these; and so forth.

**Claims**

1. A terminal device that obtains, from a server device, a license for using a content based on transaction processes and controls use of the content based on the license, each of the transaction processes including sending of a request message, receiving of a response message, and sending of a commit message for finalizing completion of one transaction, said terminal device comprising:

a holding unit operable to hold a 1-bit transaction identification flag indicating whether a current transaction process is in progress or completed; and
a sending unit operable to send the transaction identification bit instead of a commit message when sending a second or later request message, without sending a commit message in each transaction process except for a last transaction process in successive transaction processes.

2. The terminal device according to Claim 1, comprising:

a response receiving unit operable to receive each response message sent from the server device in the transaction processes; and
an update unit operable to update the transaction identification flag held by said holding unit according to each reception result of said response receiving unit.

3. The terminal device according to Claim 2, wherein said update unit is operable to set a same value as a value of a transaction identification flag held by the server device as an initial value of the transaction identification flag held by said holding unit, and to invert a value of the transaction identification flag held by said holding unit when a response message is received by said response receiving unit.

4. The terminal device according to Claim 3,
   wherein the initial value of the transaction identification flag is included in a first response message sent from the server device in the transaction processes, and
   said update unit is operable to set the transaction identification flag held by said holding unit to the initial value when said response receiving unit receives the first response message, and to invert the value of the transaction identification flag held by said holding unit when a response message is normally received by said response receiving unit.

5. The terminal device according to Claim 3,
   wherein said sending unit includes:

   a request sending unit operable to send the transaction identification bit instead of sending a commit message when sending the second or later request message in the transaction processes; and
   a commit sending unit operable to send the commit message only in the last transaction process in the transaction processes.

6. The terminal device according to Claim 5,
   wherein said request sending unit is operable to send the transaction identification bit inverted by said update unit, together with a request message for a next transaction process, in the case where a response message is normally received by said response receiving unit.

7. The terminal device according to Claim 6,
   wherein said request sending unit is operable to send again the transaction identification bit that is not inverted, together with a request message for the current transaction process, in the case where a response message is not normally received by said response receiving unit.

8. The terminal device according to Claim 2,
   wherein said terminal device performs processing for mutual authentication with the server device immediately before a first transaction process in the transaction processes, and further comprises:

   an authentication unit operable to:

   provide said sending unit with first authentication information as an authentication request, the first authentication information being used by the server device to authenticate said terminal device;
   verify second authentication information that is received by said response receiving unit as a response to the first authentication information, the second authentication information being used by said terminal device to authenticate the server device; and
   provide said sending unit with a finalization message for finalizing the mutual authentication according to a result of the verification,

   wherein said sending unit is operable to send the finalization message together with a request message for the first transaction process.

9. The terminal device according to Claim 8,
   wherein the transaction processes are performed on a session that is same as a session on which the mutual authentication has been performed.

10. The terminal device according to Claim 8,
    wherein said update unit is operable to set a same value as a value of a transaction identification flag held by the server device as an initial value of the transaction identification flag held by said holding unit, and to invert a value of the transaction identification flag held by said holding unit when a response message is received by said response receiving unit.

11. The terminal device according to Claim 10,
    wherein said sending unit includes:

    a request sending unit operable to send the transaction identification bit instead of sending a commit message when sending the second or later request message in the transaction processes; and
    a commit sending unit operable to send the commit message only in the last transaction process in the transaction processes.

12. The terminal device according to Claim 11,
    wherein said request sending unit is operable to send the transaction identification bit inverted by said update unit, together with a request message for a next transaction process, in the case where a response message is normally received by said response receiving unit.

13. The terminal device according to Claim 1,
    wherein said request sending unit is operable to send again the transaction identification bit that is not inverted, together with a request message for the current transaction process, in the case where a response message is not normally received by said response receiving unit.

**14.** A server device that provides a terminal device with a license for using a content based on transaction processes, each including receiving of a request message, sending of a response message, and receiving of a commit message for finalizing completion of one transaction, said server device comprising:

a receiving unit operable to receive a transaction identification flag that is sent, instead of the commit message, together with a second or later request message in successive transaction processes, the transaction identification flag being a 1-bit flag indicating whether a transaction process is in progress or completed in the terminal device; and
a judgment unit operable to judge whether or not completion of one transaction should be finalized based on the received transaction identification flag.

**15.** The server device according to Claim 14, wherein a value of the transaction identification flag is inverted every time a transaction is processed by the terminal device, and
said server device further comprises
a holding unit operable to hold a first flag that is a copy of the transaction identification flag that is sent together with a preceding request message in the transaction processes,
wherein said judgment unit is operable to judge that completion of a preceding transaction should be finalized in the case where the transaction identification flag in the current transaction process and the first flag held by said holding unit do not match, the transaction identification flag being received by said receiving unit.

**16.** The server device according to Claim 15, comprising
a response sending unit operable to send, to the terminal device, an initial value of the first flag as an initial value of the transaction identification flag, together with a first response message in the transaction processes.

**17.** The server device according to Claim 15, wherein said receiving unit includes:

a request receiving unit operable to receive the transaction identification flag together with the second or later request message; and
a commit receiving unit operable to receive a commit message only in a last transaction process in the transaction processes.

**18.** The server device according to Claim 17, wherein said response sending unit is operable to send a response message for a next transaction process in the case where said judgment unit judges that the completion of the preceding transaction should be finalized.

**19.** The server device according to Claim 18, wherein said response sending unit is operable to send again the response message for the preceding transaction process in the case where said judgment unit judges that the completion of the preceding transaction should not be finalized.

**20.** The server device according to Claim 15, wherein said server device performs processing for mutual authentication with the terminal device immediately before a first transaction process in the transaction processes, and further comprises:

an authentication unit operable to:

verify first authentication information that is received by said receiving unit as an authentication request, the first authentication information being used by said server device to authenticate the terminal device; and
provide second authentication information that is used by the terminal device to authenticate said server device in the case where the first authentication information is verified as valid,

wherein said request receiving unit is operable to receive a finalization message for finalizing the mutual authentication together with the first request message.

**21.** The server device according to Claim 20, wherein the transaction processes are performed on a session that is same as a session on which the mutual authentication has been performed.

**22.** The server device according to Claim 21, wherein said receiving unit includes:

a request receiving unit operable to receive the transaction identification flag together with the second or later request message; and
a commit receiving unit operable to receive a commit message only in a last transaction process in the transaction processes.

**23.** The server device according to Claim 22, wherein said response sending unit is operable to send a response message for a next transaction process in the case where said judgment unit judges that the completion of the preceding transaction should be finalized.

24. The server device according to Claim 23, wherein said response sending unit is operable to send again the response message for the preceding transaction process in the case where said judgment unit judges that the completion of the preceding transaction should not be finalized.

25. A digital content distribution system comprising a server device and a terminal device, said server device providing said terminal device with a license for using a content based on transaction processes, each including receiving of a request message, sending of a response message, and receiving of a commit message for finalizing completion of a transaction, and said terminal device controlling use of the content based on the license obtained from said server device, wherein said terminal device comprises:

a holding unit operable to hold a 1-bit transaction identification flag indicating whether a current transaction process is in progress or completed; and a sending unit operable to send the transaction identification bit instead of a commit message when sending a second or later request message, without sending a commit message in each transaction process except for a last transaction process in successive transaction processes, and said server device comprises:

a receiving unit operable to receive the transaction identification flag that is sent together with the second or later request message in the successive transaction processes; and a judgment unit operable to judge whether or not completion of one transaction should be finalized based on the received transaction identification flag.

26. A transaction processing method for use in a terminal device that obtains, from a server device, a license for using a content based on transaction processes and controls use of the content based on the license, each of the transaction processes including sending of a request message, receiving of a response message, and sending of a commit message for finalizing completion of one transaction, said method comprising:

a control step of performing a control so that a 1-bit transaction identification bit is to be sent instead of a commit message when a second or later request message is sent, without sending a commit message in each transaction process except for a last transaction process in successive transaction processes, the transaction identification bit indicating whether a current transaction process is in progress or completed; and a sending step of sending a commit message in the last transaction process.

27. A transaction processing method for use in a server device that provides a terminal device with a license for using a content based on transaction processes, each including receiving of a request message, sending of a response message, and receiving of a commit message for finalizing completion of one transaction, said method comprising:

a step of receiving a transaction identification flag that is sent, instead of the commit message, together with a second or later request message in successive transaction processes, the transaction identification flag being a 1-bit flag indicating whether a transaction process is in progress or completed in the terminal device; and a judgment step of judging whether or not completion of one transaction should be finalized based on the received transaction identification flag.

28. A transaction processing method for use in a digital content distribution system comprising a server device and a terminal device, said server device providing the terminal device with a license for using a content based on transaction processes, each including receiving of a request message, sending of a response message, and receiving of a commit message for finalizing completion of a transaction, and the terminal device controlling use of the content based on the license obtained from the server device, said method comprising:

a control step, executed by the terminal device, of performing a control so that a 1-bit transaction identification bit is to be sent instead of a commit message when a second or later request message is sent, without sending a commit message in each transaction process except for a last transaction process in successive transaction processes, the transaction identification bit indicating whether a current transaction process is in progress or completed; a sending step, executed by the terminal device, of sending a commit message in the last transaction process;

a receiving step, executed by the server device, of receiving the transaction identification flag that is sent, instead of the commit message, together with the second or later request message in the successive transaction processes, the transaction identification flag being a 1-bit flag indicating whether a transaction process is in progress or completed in the terminal device; and

a judgment step, executed by the server device, of judging whether or not completion of one transaction should be finalized based on the received transaction identification flag.

29. A program for causing transaction processes to be executed in a terminal device that obtains, from a server device, a license for using a content based on the transaction processes and controls use of the content based on the license, each of the transaction processes including sending of a request message, receiving of a response message, and sending of a commit message for finalizing completion of one transaction, said program causing a computer in the terminal device to function as:

a holding unit operable to hold a 1-bit transaction identification flag indicating whether a current transaction process is in progress or completed; and

a sending unit operable to send the transaction identification bit instead of a commit message when sending a second or later request message, without sending a commit message in each transaction process except for a last transaction process in successive transaction processes.

30. A program for causing transaction processes to be executed in a server device that provides a terminal device with a license for using a content based on transaction processes, each including receiving of a request message, sending of a response message, and receiving of a commit message for finalizing completion of one transaction, said program causing a computer in the server device to function as:

a receiving unit operable to receive a transaction identification flag that is sent, instead of the commit message, together with a second or later request message in successive transaction processes, the transaction identification flag being a 1-bit flag indicating whether a transaction process is in progress or completed in the terminal device; and

a judgment unit operable to judge whether or not completion of one transaction should be finalized based on the received transaction iden-

tification flag.

## AMENDED CLAIMS UNDER ART. 19.1 PCT

**1.** (Amended) A terminal device that obtains, from a server device, a license for using a content based on transaction processes and controls use of the content based on the license, each of the transaction processes including sending of a request message, receiving of a response message, and sending of a commit message for finalizing completion of one transaction, said terminal device comprising:

a holding unit operable to hold a 1-bit transaction identification bit indicating whether a current transaction process is in progress or completed; and

a sending unit operable to send the transaction identification bit instead of a commit message when sending a second or later request message, without sending a commit message in each transaction process except for a last transaction process in successive transaction processes.

**2.** (Amended) The terminal device according to Claim 1, comprising:

a response receiving unit operable to receive each response message sent from the server device in the transaction processes; and

an update unit operable to update the transaction identification bit held by said holding unit according to each reception result of said response receiving unit.

**3.** (Amended) The terminal device according to Claim 2,

wherein said update unit is operable to set a same value as a value of a transaction identification bit held by the server device as an initial value of the transaction identification bit held by said holding unit, and to invert a value of the transaction identification bit held by said holding unit when a response message is received by said response receiving unit.

**4.** (Amended) The terminal device according to Claim 3,

wherein the initial value of the transaction identification bit is included in a first response message sent from the server device in the transaction processes, and

said update unit is operable to set the transaction identification bit held by said holding unit to the initial value when said response receiving unit receives the first response message, and to invert the value of the transaction identification bit held by said holding unit when a response message is normally received by said response receiving unit.

**5.** The terminal device according to Claim 3, wherein said sending unit includes:

a request sending unit operable to send the transaction identification bit instead of sending a commit message when sending the second or later request message in the transaction processes; and a commit sending unit operable to send the commit message only in the last transaction process in the transaction processes.

**6.** The terminal device according to Claim 5, wherein said request sending unit is operable to send the transaction identification bit inverted by said update unit, together with a request message for a next transaction process, in the case where a response message is normally received by said response receiving unit.

**7.** The terminal device according to Claim 6, wherein said request sending unit is operable to send again the transaction identification bit that is not inverted, together with a request message for the current transaction process, in the case where a response message is not normally received by said response receiving unit.

**8.** The terminal device according to Claim 2, wherein said terminal device performs processing for mutual authentication with the server device immediately before a first transaction process in the transaction processes, and further comprises:

an authentication unit operable to:

provide said sending unit with first authentication information as an authentication request, the first authentication information being used by the server device to authenticate said terminal device; verify second authentication information that is received by said response receiving unit as a response to the first authentication information, the second authentication information being used by said terminal device to authenticate the server device; and provide said sending unit with a finalization message for finalizing the mutual authentication according to a result of the verification,

wherein said sending unit is operable to send the finalization message together with a request message for the first transaction process.

**9.** The terminal device according to Claim 8, wherein the transaction processes are performed on a session that is same as a session on which the mutual authentication has been performed.

**10.** (Amended) The terminal device according to Claim 8, wherein said update unit is operable to set a same value as a value of a transaction identification bit held by the server device as an initial value of the transaction identification bit held by said holding unit, and to invert a value of the transaction identification bit held by said holding unit when a response message is received by said response receiving unit.

**11.** The terminal device according to Claim 10, wherein said sending unit includes:

a request sending unit operable to send the transaction identification bit instead of sending a commit message when sending the second or later request message in the transaction processes; and a commit sending unit operable to send the commit message only in the last transaction process in the transaction processes.

**12.** The terminal device according to Claim 11, wherein said request sending unit is operable to send the transaction identification bit inverted by said update unit, together with a request message for a next transaction process, in the case where a response message is normally received by said response receiving unit.

**13.** The terminal device according to Claim 1, wherein said request sending unit is operable to send again the transaction identification bit that is not inverted, together with a request message for the current transaction process, in the case where a response message is not normally received by said response receiving unit.

**14.** (Amended) A server device that provides a terminal device with a license for using a content based on transaction processes, each including receiving of a request message, sending of a response message, and receiving of a commit message for finalizing completion of one transaction, said server device comprising:

a receiving unit operable to receive a transaction identification bit that is sent, instead of the commit message, together with a second or later request message in successive transaction processes, the transaction identification bit being a 1-bit flag indicating whether a transaction process is in progress or completed in the terminal device; and

a judgment unit operable to judge whether or not completion of one transaction should be finalized based on the received transaction identification bit.

**15.** (Amended) The server device according to Claim 14,

wherein a value of the transaction identification bit is inverted every time a transaction is processed by the terminal device, and

said server device further comprises

a holding unit operable to hold a first flag that is a copy of the transaction identification bit that is sent together with a preceding request message in the transaction processes,

wherein said judgment unit is operable to judge that completion of a preceding transaction should be finalized in the case where the transaction identification bit in the current transaction process and the first flag held by said holding unit do not match, the transaction identification bit being received by said receiving unit.

**16.** (Amended) The server device according to Claim 15, comprising

a response sending unit operable to send, to the terminal device, an initial value of the first flag as an initial value of the transaction identification bit, together with a first response message in the transaction processes.

**17.** (Amended) The server device according to Claim 15,

wherein said receiving unit includes:

a request receiving unit operable to receive the transaction identification bit together with the second or later request message; and

a commit receiving unit operable to receive a commit message only in a last transaction process in the transaction processes.

**18.** The server device according to Claim 17,

wherein said response sending unit is operable to send a response message for a next transaction process in the case where said judgment unit judges that the completion of the preceding transaction should be finalized.

**19.** The server device according to Claim 18,

wherein said response sending unit is operable to send again the response message for the preceding transaction process in the case where said judgment unit judges that the completion of the preceding transaction should not be finalized.

**20.** The server device according to Claim 15,

wherein said server device performs processing for mutual authentication with the terminal device immediately before a first transaction process in the transaction processes, and further comprises:

an authentication unit operable to:

verify first authentication information that is received by said receiving unit as an authentication request, the first authentication information being used by said server device to authenticate the terminal device; and

provide second authentication information that is used by the terminal device to authenticate said server device in the case where the first authentication information is verified as valid,

wherein said request receiving unit is operable to receive a finalization message for finalizing the mutual authentication together with the first request message.

**21.** The server device according to Claim 20,

wherein the transaction processes are performed on a session that is same as a session on which the mutual authentication has been performed.

**22.** (Amended) The server device according to Claim 21,

wherein said receiving unit includes:

a request receiving unit operable to receive the transaction identification bit together with the second or later request message; and

a commit receiving unit operable to receive a commit message only in a last transaction process in the transaction processes.

**23.** The server device according to Claim 22,

wherein said response sending unit is operable to send a response message for a next transaction process in the case where said judgment unit judges that the completion of the preceding transaction should be finalized.

**24.** The server device according to Claim 23,

wherein said response sending unit is operable to send again the response message for the preceding transaction process in the case where said judgment unit judges that the completion of the preceding transaction should not be finalized.

**25.** (Amended) A digital content distribution system comprising a server device and a terminal device, said server device providing said terminal device with a license for using a content based on transaction processes, each including receiving of a request message, sending of a response message, and receiving of a commit message for finalizing completion of a transaction, and said terminal device controlling use of the content based on the license obtained from said server device,
   wherein said terminal device comprises:

a holding unit operable to hold a 1-bit transaction identification bit indicating whether a current transaction process is in progress or completed; and
a sending unit operable to send the transaction identification bit instead of a commit message when sending a second or later request message, without sending a commit message in each transaction process except for a last transaction process in successive transaction processes, and
said server device comprises:

a receiving unit operable to receive the transaction identification bit that is sent together with the second or later request message in the successive transaction processes; and
a judgment unit operable to judge whether or not completion of one transaction should be finalized based on the received transaction identification bit.

**26.** A transaction processing method for use in a terminal device that obtains, from a server device, a license for using a content based on transaction processes and controls use of the content based on the license, each of the transaction processes including sending of a request message, receiving of a response message, and sending of a commit message for finalizing completion of one transaction, said method comprising:

a control step of performing a control so that a 1-bit transaction identification bit is to be sent instead of a commit message when a second or later request message is sent, without sending a commit message in each transaction process except for a last transaction process in successive transaction processes, the transaction identification bit indicating whether a current transaction process is in progress or completed; and

a sending step of sending a commit message in the last transaction process.

**27.** (Amended) A transaction processing method for use in a server device that provides a terminal device with a license for using a content based on transaction processes, each including receiving of a request message, sending of a response message, and receiving of a commit message for finalizing completion of one transaction, said method comprising:

a step of receiving a transaction identification bit that is sent, instead of the commit message, together with a second or later request message in successive transaction processes, the transaction identification bit being a 1-bit flag indicating whether a transaction process is in progress or completed in the terminal device; and
a judgment step of judging whether or not completion of one transaction should be finalized based on the received transaction identification bit.

**28.** (Amended) A transaction processing method for use in a digital content distribution system comprising a server device and a terminal device, said server device providing the terminal device with a license for using a content based on transaction processes, each including receiving of a request message, sending of a response message, and receiving of a commit message for finalizing completion of a transaction, and the terminal device controlling use of the content based on the license obtained from the server device, said method comprising:

a control step, executed by the terminal device, of performing a control so that a 1-bit transaction identification bit is to be sent instead of a commit message when a second or later request message is sent, without sending a commit message in each transaction process except for a last transaction process in successive transaction processes, the transaction identification bit indicating whether a current transaction process is in progress or completed;
a sending step, executed by the terminal device, of sending a commit message in the last transaction process;
a receiving step, executed by the server device, of receiving the transaction identification bit that is sent, instead of the commit message, together with the second or later request message in the successive transaction processes, the transaction identification bit being a 1-bit flag indicating whether a transaction process is in progress or completed in the terminal device; and

a judgment step, executed by the server device, of judging whether or not completion of one transaction should be finalized based on the received transaction identification bit.

**29.** (Amended) A program for causing transaction processes to be executed in a terminal device that obtains, from a server device, a license for using a content based on the transaction processes and controls use of the content based on the license, each of the transaction processes including sending of a request message, receiving of a response message, and sending of a commit message for finalizing completion of one transaction, said program causing a computer in the terminal device to function as:

a holding unit operable to hold a 1-bit transaction identification bit indicating whether a current transaction process is in progress or completed; and

a sending unit operable to send the transaction identification bit instead of a commit message when sending a second or later request message, without sending a commit message in each transaction process except for a last transaction process in successive transaction processes.

**30.** (Amended) A program for causing transaction processes to be executed in a server device that provides a terminal device with a license for using a content based on transaction processes, each including receiving of a request message, sending of a response message, and receiving of a commit message for finalizing completion of one transaction, said program causing a computer in the server device to function as:

a receiving unit operable to receive a transaction identification bit that is sent, instead of the commit message, together with a second or later request message in successive transaction processes, the transaction identification bit being a 1-bit flag indicating whether a transaction process is in progress or completed in the terminal device; and

a judgment unit operable to judge whether or not completion of one transaction should be finalized based on the received transaction identification bit.

14-17, 22, 25, and 27-30 have been amended to "transaction identification bit" for consistency of terms.

**Statement under Art. 19.1 PCT**

"Transaction identification flag" in Claims 1-4, 10,

FIG. 1

**User terminal** (3)

- 31 User instruction processing unit
- 32 Terminal information storage unit
- 33 Content storage unit
- 34 Usage right management unit
- 35 Usage right database
- 36 Security management/communication unit
- 37 Output unit

User instruction

**Content distribution device** (1)

- 11 Content purchase processing unit
- 12 User registration unit
- 13 User right registration unit
- 14 User right generation unit
- 15 Content encryption unit
- 16 Content management unit
- 17 Security management/communication unit
- 18 User database
- 19 Content right database
- 20 User-owned right database
- 21 Content database

## FIG. 2

17

**Security management/ communication unit**

201
Unique key information storage unit

202
Random number generation unit

205
Communication unit

204
Control unit

203
Cipher processing unit

206
Communication log database

27

EP 1 603 051 A1

# FIG. 3

Security management/communication unit — 36

- Communication unit — 305
- Random number generation unit — 302
- Unique key information storage unit — 301
- Control unit — 304
- Communication log database — 306
- Cipher processing unit — 303

EP 1 603 051 A1

## FIG. 4

Content distribution device 1 | User terminal 3

START

S41
Issue content purchase request according to user instruction

S42
Send information about all contents in response to content purchase request

S43
Determined to purchase content? — No

Yes S44
Send content purchase determination notice and user information

S45
Charging processing

END

S46
User information already registered in user database 18? — Yes

No S47
Register user information into user database 18

S48
Register, into user-owned right database 21, right owned by user through purchase

END

## FIG. 5

| Content name | Content ID | Usage condition | Fee |
|---|---|---|---|
| Movie A | 112233 | Number of reproductions=2 | ¥400 |
| Music B | 334567 | Number of reproductions=5<br>Total reproduction time=1H | ¥500<br>¥1000 |
| Game C | 321098 | Total reproduction time=2H<br>Unlimited | ¥700<br>¥2000 |

## FIG. 6

| User ID | Content ID | Usage condition |
|---|---|---|
| 0001 | 112233 | Number of reproductions=2 |
| 0002 | 321098 | Total reproduction time=2H |

## FIG. 7

| User ID | Content ID | Usage condition |
|---------|-----------|-----------------|
| 0001 | 112233 | Number of reproductions=2 |
| 0002 | 321098 | Total reproduction time=2H |

## FIG. 8

| Content ID | Content name | Content encryption key | File name |
|-----------|--------------|------------------------|-----------|
| 112233 | Movie A | 0123456789.. | movieA.mpg |
| 234567 | Music B | 7361278168.. | musicB.wav |

EP 1 603 051 A1

# FIG. 9

Content distribution device 1 | User terminal 3

START

S91
Issue content use request according to user instruction

S92
Check whether there is registration corresponding to content use request

S93
Registration?

No

Yes — S94
Generate and send usage right according to content use request

S95
Send content according to content use request

S96
Decrypt content based on usage right and perform reproduction processing

S97
Notify user terminal that request is rejected

END

END

# FIG. 10A

Content distribution device 1             User terminal 3

P1

Authentication information A

**Initial phase**

T. Authentication information B

P2

Request, T, Authentication information C

**First command communication phase**

Response

P3a

Request, T

**Command communication phase**

Response

Repeated

P4

Commit

**Commit phase**

Response

# FIG. 10B

Content distribution device 1          User terminal 3

P1

**Initial phase**

Initial value T=0          Initial value T=0

T=1

**First command communication phase**

T=1

P2

T=0

**Command communication phase**

T=0

Repeated

P3a

T=1

P4

**Commit phase**

T deleted          T deleted

## FIG. 10C

Content distribution device 1          User terminal 3

P1

Initial
value T=0

**Initial phase**

Initial
value T=0

T=1

T=1

**First command communication
phase**

P2

T=1

P11

T=1

**Initial phase**

T=1

T=1

T=1

(Request again)
**First command communication
phase**       (Send again)

P12

T=0

T=0

**Command communication phase**

P13a

Repeated

T=1

P14

T deleted

**Commit phase**

T deleted

# FIG. 10D

Content distribution device 1         User terminal 3

P1

**Initial phase**

| Initial value T=0 | | Initial value T=0 |

T=1

**First command communication phase**

T=0      P2

T=1

P21

**Initial phase**

T=0        T=1

T=1

(Request again/Request newly)
**First command communication phase**

T=1      P22

T=0

**Command communication phase**

T=0      P23a

Repeated

T=1

P24

**Commit phase**

T deleted        T deleted

# FIG. 11

**Content distribution device 1** | **User terminal 3**

START

S1101
Send random number Rc and terminal public key certificate

S1102
Verify signature of terminal public key certificate

S1103
Verification succeeded?
No / Yes

S1105
Generate random number Rs and parameter DHs

S1106
Generate signature data S(s, Rc||T||DHs)

S1107
Send random number Rs, T, parameterDHs, and signature data

To S1201

S1104
Notify user terminal that request is rejected

END

# FIG. 12

| Content distribution device 1 | User terminal 3 |
|---|---|

( From S1107 )

**S1201**
Verify signature of server public key certificate

**S1202**
Verification succeeded? — No

Yes **S1204**
Verify signature data

**S1205**
Verification succeeded? — No

Yes **S1206**
Generate parameter DHc

**S1207**
Generate session key KS

**S1208**
Store T into communication log database

**S1209**
Generate signature data S(c, Rs||DHc) and encrypted data

**S1210**
Send parameter DHc, signature data, and encrypted data

( To S1301 )

**S1203**
Notify user instruction processing unit 31 that request is rejected

( END )

# FIG. 13

Content distribution device 1 | User terminal 3

( From S1210 )

S1301 —
**Verify signature data**

S1302
Verification succeeded?

No →

↓ Yes   S1304
Generate session key KS and decrypt encrypted data

S1305
Two Ts match?

Yes →

↓ No   S1306
Store T into communication log database

S1307
Notify user right generation unit 14 of content use request as new transaction

S1308
Notify user right generation unit 14 of content use request as restart transaction

S1309 —
Encrypt usage right generated by user right generation unit 14 using KS, and send encrypted use right together with content

S1303
Notify user terminal that request is rejected

( END )

S1310
Decrypt usage right using KS, and invert value of T in communication log database

( To S1401 or S1501 )

## FIG. 14

Content distribution device 1 | User terminal 3

**User terminal 3**

S1401 — Encrypt message

S1402 — Send encrypted data

**Content distribution device 1**

S1403 — Decrypt encrypted data

S1404 — Two Ts match?
- Yes
- No

S1405 — Store T into communication log database

S1406 — Notify user right generation unit 14 of content use request as new transaction

S1407 — Notify user right generation unit 14 of content use request as restart transaction

S1408 — Encrypt usage right generated by user right generation unit 14 using KS, and send encrypted use right together with content

S1409 — Decrypt usage right using KS, and invert value of T in communication log database

To S1401 or S1501

# FIG. 15

Content distribution device 1 | User terminal 3

S1501
Encrypt commit message

S1502
Send encrypted data

S1503
Decrypt encrypted data

S1504
Delete T in communication log database

S1505
Encrypt ACK message using KS, and send encrypted message to user terminal

S1506
Decrypt ACK message using KS, and delete T in communication log database

END

## INTERNATIONAL SEARCH REPORT

| | International application No. |
| --- | --- |
| | PCT/JP2004/000677 |

**A. CLASSIFICATION OF SUBJECT MATTER**
Int.Cl⁷ G06F15/00, G06F17/60

According to International Patent Classification (IPC) or to both national classification and IPC

**B. FIELDS SEARCHED**

Minimum documentation searched (classification system followed by classification symbols)
Int.Cl⁷ G06F15/00, G06F17/60, H04L9/00, G06F12/14

Documentation searched other than minimum documentation to the extent that such documents are included in the fields searched

| | | | |
| --- | --- | --- | --- |
| Jitsuyo Shinan Koho | 1922-1996 | Toroku Jitsuyo Shinan Koho | 1996-2004 |
| Kokai Jitsuyo Shinan Koho | 1971-2004 | Jitsuyo Shinan Toroku Koho | 1994-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2003-16041 A (Sony Corp.), 17 January, 2003 (17.01.03), Full text; all drawings & WO 3005263 A1 | 1-30 |
| A | JP 2002-141895 A (Sony Corp.), 17 May, 2002 (17.05.02), Full text; all drawings & WO 2037746 A1 & AU 1520902 A & US 2002-99663 A1 & EP 1237321 A1 & CN 1394408 T | 1-30 |

☐ Further documents are listed in the continuation of Box C.     ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 28 April, 2004 (28.04.04) | 18 May, 2004 (18.05.04) |

| Name and mailing address of the ISA/ | Authorized officer |
| --- | --- |
| Japanese Patent Office | |
| Facsimile No. | Telephone No. |

Form PCT/ISA/210 (second sheet) (January 2004)

EP 1 603 051 A1

| INTERNATIONAL SEARCH REPORT | International application No. |
|---|---|
| | PCT/JP2004/000677 |

**Box No. I    Nucleotide and/or amino acid sequence(s) (Continuation of item1.b of the first sheet)**

1.  With regard to any nucleotide and/or amino acid sequence disclosed in the international application and necessary to the claimed invention, the international search was carried out on the basis of:

    a.  type of material
        ☐ a sequence listing
        ☐ table(s) related to the sequence listing

    b.  format of material
        ☐ in written format
        ☐ in computer readable form

    c.  time of filing/furnishing
        ☐ contained in the international application as filed
        ☐ filed together with the international application in computer readable form
        ☐ furnished subsequently to this Authority for the purposes of search

2.  ☐ In addition, in the case that more than one version or copy of a sequence listing and/or table relating thereto has been filed or furnished, the required statements that the information in the subsequent or additional copies is identical to that in the application as filed or does not go beyond the application as filed, as appropriate, were furnished.

3.  Additional comments:

Form PCT/ISA/210 (continuation of first sheet (1)) (January 2004)

43